(19) Europäisches Patentamt
European Patent Office
Office européen des brevets

(11) **EP 4 645 482 A1**

(12) **EUROPÄISCHE PATENTANMELDUNG**


(43) Veröffentlichungstag:
**05.11.2025 Patentblatt 2025/45**

(21) Anmeldenummer: **24172943.3**

(22) Anmeldetag: **29.04.2024**

(51) Internationale Patentklassifikation (IPC):
***H01M 8/1018*** $^{(2016.01)}$ ***C25B 1/04*** $^{(2021.01)}$
***C25B 9/23*** $^{(2021.01)}$ ***C25B 11/054*** $^{(2021.01)}$
***C25B 11/056*** $^{(2021.01)}$ ***C25B 11/075*** $^{(2021.01)}$
***C25B 11/077*** $^{(2021.01)}$ ***C25B 11/081*** $^{(2021.01)}$
***C25B 13/08*** $^{(2006.01)}$

(52) Gemeinsame Patentklassifikation (CPC):
**B01D 69/12; B01D 71/68; B01D 71/82; C25B 9/23; C25B 11/054; C25B 13/08; H01M 4/8663; H01M 4/8668; H01M 4/881; H01M 4/8828; H01M 4/9016; H01M 4/9041; H01M 4/9058; H01M 4/9083; H01M 4/926;** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**



(71) Anmelder: **Evonik Operations GmbH**
**45128 Essen (DE)**

(72) Erfinder:
- **WATZELE, Sebastian**
  **45657 Recklinghausen (DE)**
- **MERKULOV, Sonja**
  **45770 Marl (DE)**
- **WILD, Andreas**
  **45721 Haltern am See (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**


(54) **DIREKTBESCHICHTUNG VON ANIONENAUSTAUSCHMEMBRANEN MIT KATALYTISCH AKTIVEM MATERIAL**


(57) Die Erfindung befasst sich mit dem Beschichten von Anionenaustauschmembranen (AEM) mit katalytisch aktiven Material. Die so erhaltenen CCM werden in elektrochemischen Zellen eingesetzt, insbesondere zur alkalischen Wasserelektrolyse. Der Erfindung lag die Aufgabe zu Grunde, ein Verfahren zur Herstellung einer CCM durch Direktbeschichtung anzugeben, welches die notwendige Ebenheit der AEM erhält und möglichst ohne die Verwendung von verlorenen Folien und ohne CMR-Stoffe auskommt. Weiter soll die Quellung minimiert werden. Auch soll das Verfahren mit fluorfreien Ionomeren durchführbar sein. Die Erfindung beruht auf der Erkenntnis, dass die Zugabe bestimmter organischer Substanzen dazu führt, dass die AEM nicht oder lediglich geringfügig quillt (Antiquellmittel). Überraschenderweise hat sich herausgestellt, dass sich als Antiquellmittel geeignete Substanzen anhand ihres Löslichkeits-verhaltens identifizieren lassen, genauer gesagt, anhand ihrer Hansen-Parameter.


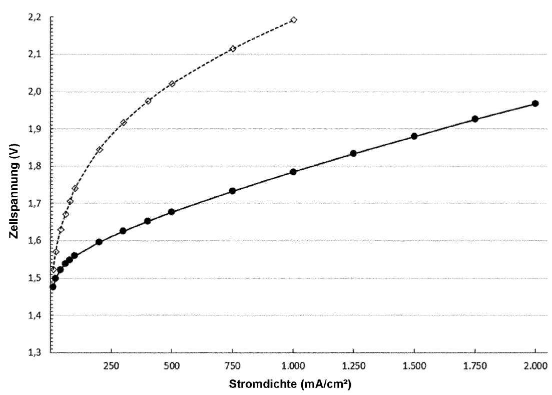


Fig. 4

EP 4 645 482 A1

(52) Gemeinsame Patentklassifikation (CPC): (Forts.)
**H01M 8/1025; H01M 8/1027; H01M 8/1039;**
**H01M 8/1069; H01M 8/186;** B01D 2325/42;
C25B 1/04; C25B 11/075; C25B 11/077;
C25B 11/081

## Beschreibung

Die Erfindung befasst sich mit dem Beschichten von Anionenaustauschmembranen mit katalytisch aktivem Material. Die katalytisch aktiv beschichteten Anionenaustauschmembranen werden in elektrochemischen Zellen eingesetzt, insbesondere zur Wasserelektrolyse.

Anionenaustauschmembranen (engl.: anion exchange membranes - AEM) werden in elektrochemischen Zellen verbaut. Sie dienen in der Regel dazu, Reaktionsprodukte von Anode und Kathode zu separieren und negativ geladene Ionen (Anionen) in Richtung der Anode zu leiten. Die in der Zelle praktizierten elektrochemischen Reaktionen werden dadurch effizienter, sicherer oder sogar erst ermöglicht.

Ein Beispiel für einen elektrochemischen Prozess, der mit Hilfe einer Anionenaustauschmembran durchgeführt wird, ist die Herstellung von Wasserstoff und Sauerstoff durch alkalische Wasserelektrolyse. Dabei wird eine Anionenaustauschmembran als Separator zwischen den Elektroden der Zelle eingesetzt. Deswegen wird das Verfahren auch als AEM basierte Wasserspaltung (engl. AEM water electrolysis, AEMWE) bezeichnet. Da die Reaktion im alkalischen Milieu erfolgt, wird die AEM basierte Wasserspaltung auch oft alkalische Membranwasserelektrolyse (engl. alkaline membrane water electrolysis) genannt.

Bei der AEM-basierten Wasserspaltung wird eine elektrochemische Zelle mit Wasser beziehungsweise mit einem basischen Elektrolyten auf Wasserbasis gefüllt und eine Spannung zwischen Anode und Kathode angelegt. Auf Kathodenseite wird das Wasser ($H_2O$ ) in Wasserstoff ($H_2$) und Hydroxid-Ionen (OH-) zerlegt (Gleichung K). Die Anionenaustauschmembran transportiert die Hydroxid-Ionen auf die Anodenseite, wo diese zu Sauerstoff (Oz) oxidiert werden (Gleichung A). Auf diese Weise entsteht auf der Anodenseite Sauerstoff, währenddessen auf der Kathodenseite Wasserstoff entsteht. Folglich wird die Anodenseite auch Sauerstoffseite genannt, währenddessen die Kathodenseite auch Wasserstoffseite heißt.

$$2\ H_2O + 2\ e- \text{--->}\ H_2 + 2\ OH^-\ \text{(K) Reduktion / Kathodenreaktion}$$

$$2\ OH- \rightarrow \tfrac{1}{2}\ Oz + H_2O + 2\ e^-\ \text{(A) Oxidation / Anodenreaktion}$$

Um den beschriebenen Effekt zu ermöglichen, muss die Anionenaustauschmembran zwischen Anode und Kathode die Hydroxid-Ionen leiten. Zugleich muss sie - abgesehen von der ionischen Leitfähigkeit - möglichst elektrisch isolieren, damit es nicht zu einem elektrischen Kurzschluss zwischen Anode und Kathode kommt. Schließlich muss die Anionenaustauschmembran eine möglichst niedrige Gaspermeabilität aufweisen, damit es nicht zu einer Rückvermischung der entstehenden Gase kommt. Zudem muss die Anionenaustauschmembran den alkalischen Bedingungen, die in der AEM Wasserspaltung herrschen, Stand halten. Diese Eigenschaften werden von speziellen Anionen leitenden Polymeren (auch genannt: Anionen-leitfähige Ionomere) erfüllt. Anionenaustauschmembranen bestehen vollständig oder zumindest teilweise aus solchen Anionen leitenden Ionomeren. AEM liegen meist in Gestalt einer Flachmembran vor.

Um die Reaktion in der elektrochemischen Zelle zu beschleunigen, werden sowohl auf kathodischer als auch auf anodischer Seite katalytisch aktive oder aktivierbare Materialien (auch genannt Elektrokatalysatoren) eingebaut. Dies geschieht durch Einbringen von katalytisch aktiven Schichten in die Zelle oder durch katalytisch aktive Beschichtungen von Zellbauteilen. Diese können sich auf einem eigens dafür in die Zelle eingebrachten Substratmaterial oder auf einer porösen Transportschicht befinden (engl. catalyst-coated substrate, CCS) oder aber die Membran kann direkt mit katalytisch aktivem Material beschichtet sein (engl. catalyst-coated membrane, CCM).

Einen hervorragenden Überblick über Aufbau und Werkstoffe der gegenwärtig in der AEM basierten Wasserspaltung eingesetzten elektrochemischen Zellen bieten:

Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

Nachdem Grundlagenfragen der Materialwahl und der Betriebsbedingungen geklärt sind, stellt sich bei der Entwicklung von Anlagen zum Betrieb von elektrochemischen Prozessen das Problem, wie einzelne Bestandteile der elektrochemischen Zellen im industriellen Maßstab gefertigt werden können.

So ist es im Interesse der Energieeffizienz, den Innenwiderstand der elektrochemischen Zelle möglichst gering zu halten. Dies kann mit einem kompakten Aufbau ermöglicht werden, indem die Elektroden besonders dicht an dem Separator platziert werden und der Elektrokatalysator auch möglichst dicht an der jeweiligen Elektrode platziert wird.

Ein Weg, diesen kompakten Aufbau zu erreichen, ist die bereits erwähnte CCM-Bauweise, bei der die Anionenaustauschmembran mit einer Beschichtung versehen wird, die katalytisch aktives bzw. katalytisch aktivierbares Material enthält. So präpariert, bringt die Anionenaustauschmembran beim Zusammenbau der Zelle den Elektrokatalysator gleich mit. Auf diese Weise entfällt bei der Assemblierung der Zelle das Handhaben des Katalysators und es wird ein kompakter Zellaufbau erreicht, der einen geringen Innenwiderstand ermöglicht.

Bei der Beschichtung von Anionenaustauschmembranen mit Elektrokatalysatoren ist zu beachten, dass es sich

bei Substrat (Membran) und Beschichtungsstoff (Katalysator) um sehr unterschiedliche Materialien handelt: Die Membran besteht in der Regel aus einem ionenleitenden Spezial-Polymer (Ionomer) in Gestalt einer Folie, währenddessen als Elektrokatalysator meist Metalle oder Metalloxide in partikulärer Form eingesetzt werden. Um die katalytisch aktiven Partikel auf der Folie zu immobilisieren, werden polymere Haftvermittler eingesetzt, welche die Partikel mit der Membran verkleben. Bei den Haftvermittlern kann es sich auch um Ionomere handeln, aus einem Material wie das der Anionenaustauschmembran.

Aufgrund der Heterogenität der beteiligten Materialien ist die Herstellung von CCM nicht trivial. Anspruchsvoll ist auch die Handhabung der Materialien während der Beschichtung.

Ein sowohl in der Manufaktur als auch in der industriellen Produktion von CCM praktiziertes Verfahren ist das so genannte Decal-Verfahren. Dabei wird der Katalysator zunächst mit einem thermoplastischen Haftvermittler zu einer Beschichtungsmasse vermengt und diese auf ein Transfersubstrat, meist eine PTFE-Folie, aufgetragen. Sodann wird das beschichtete Transfersubstrat mit der Anionenaustauschmembran verpresst und erhitzt. Der Thermoplast schmilzt dabei an und verklebt die Katalysatorpartikel mit der Membran. Die PTFE-Folie wird anschließend wie ein Abziehbild (engl.: decal) von der Membran abgezogen und verworfen. Auf der Membran verbleibt eine Beschichtung, die aus dem Haftvermittler und den darin immobilisierten Katalysatorpartikeln besteht.

Eine Übersicht über das Decal-Verfahren bietet:
Frölich, Konstantin: Der Decal-Prozess zur Herstellung katalysatorbeschichteter Membranen für PEM-Brennstoffzellen Schriftenreihe des Instituts für Angewandte Materialien, Karlsruher Institut für Technologie. DOI: 10.5445/KSP/1000045306

Wenngleich Frölich den Decal-Prozess anhand von CCM beschreibt, die für den Einsatz in PEM-Brennstoffzellen bestimmt sind (PEM steht für proton exchange membrane - Protonen leitende Membran), lässt sich das dort Gesagte grundsätzlich auch auf CCM übertragen, die in der AEM-basierten Wasserspaltung eingesetzt werden sollen.

Dabei werden aber prinzipielle Nachteile des Decal-Prozesses in Kauf genommen: So erfordert der Decal-Prozess hohen Druck und hohe Temperaturen beim Verpressen, damit der Haftvermittler entsprechend die Katalysatorpartikel mit dem Membranwerkstoff verbindet. Allerdings sind die Membranwerkstoffe, die in der alkalischen Wasserelektrolyse eingesetzt werden, häufig sehr temperaturempfindlich, sodass die im Decal-Prozess normalerweise gefahrenen Temperaturen zu hoch sind. Dies gilt umso mehr, wenn ein Anionen leitendes Polymer als Haftvermittler eingesetzt werden soll.

Ein weiterer prinzipbedingter Nachteil des Decal-Prozesses ist der notwendige Einsatz eines Transfersubstrats. Diese Transfersubstrate - meist handelt es sich um Folien aus PTFE - werden nach dem Beschichten oder spätestens vor dem Einbau der CCM in die Zelle von der beschichteten Membran abgezogen und verworfen (verlorene Folie). Aus ökologischen Gründen ist dies bedenklich, insbesondere dann, wenn fluorhaltige Polymere wie PTFE als Folienwerkstoff für das Transfersubstrat eingesetzt werden.

Von daher besteht ein Interesse daran, ein Verfahren zur Herstellung einer in der alkalischen Membranwasserelektrolyse einsetzbaren CCM zu entwickeln, welches ohne eine Transferfolie auskommt. Insbesondere soll die Anionenaustauschmembran mit der katalytisch aktiven oder aktivierbaren Schicht direkt beschichtet werden.

Ein entsprechendes Direktbeschichtungsverfahren wurde bereits von Koch et. vorgeschlagen:
Koch, S., Metzler, L., Kilian, S. K., Heizmann, P. A., Lombeck, F., Breitwieser, M., Vierrath, S., Toward Scalable Production: Catalyst-Coated Membranes (CCMs) forAnion-Exchange Membrane Water Electrolysis via Direct Bar Coating. Adv. Sustainable Syst. 2023, 7, 2200332. DOI: 10.1002/adsu.202200332

Hier wird eine flache, Anionen leitende Membran zunächst mit einer PTFE-Folie maskiert und in deren freien Bereiche mit einer katalysatorhaltigen Zusammensetzung direkt beschichtet. Zusätzlich wird eine Schutzfolie ebenfalls aus PTFE aufgeklebt. Die Maske dient dazu, Spannungen in der Membran aufzunehmen, damit sich die Membran beim Beschichten nicht zu stark verzieht. Die Formänderung der Membran rührt daher, dass das in der Zusammensetzung enthaltene Lösemittel (Wasser und Methanol) den Membranwerkstoff quillt: Durch das Eindringen des Lösemittelgemisches in den Membranwerkstoff nimmt das Volumen der Membran beim Beschichten zu, sodass in der Grenzschicht zwischen Katalysator und Membran mechanische Spannungen eingelagert werden, welche die beschichtete Membran insgesamt verzerren. Im Extremfall wirft die beschichtete Membran Falten. Ein Einbau einer verzerrten oder gar faltigen CCM in eine elektrochemische Zelle ist kaum möglich.

Aber selbst geringfügige Abweichungen von der Ebenheit der CCM führen dazu, dass die Dichtelemente der elektrochemischen Zelle im Kontaktbereich der CCM nicht ordnungsgemäß anliegen, wodurch bei der elektrochemischen Zelle Undichtigkeiten auftreten können. Da bei vielen Elektrolysen potentiell giftige oder explosive Gase entstehen, ist eine saubere Abdichtung der Zelle unverzichtbar. Dies gelingt nur mit einer hinreichend faltenfreien CCM. Aber auch bereits während der Herstellung der CCM ist ein Quellen der Membran tunlichst zu vermeiden, weil dies die Prozessierbarkeit auf Beschichtungsmaschinen mindert: So wird insbesondere der Bandtransport in rationellen Rolle-zu-Rolle-Prozessen erschwert. Aus all diesen Gründen benutzte die Arbeitsgruppe um Susanne Koch die Maskier-Folie, um ein Verzerren der Membran beim Beschichten zu verringern.

Nachteil des von Koch et al. vorgeschlagenen Prozesses ist, dass dieser die Maskier-Folie erfordert, um das

Quellen der Membran und damit letztendlich Faltenwurf zu verhindern. Die Maske dient ähnlich wie das Transfer-Substrat in einem Decal-Prozess ausschließlich der Herstellung der CCM und muss im gebrauchsfertigen Zustand der CCM wieder entfernt sein. Die Maske ist daher auch als eine verlorene Folie anzusehen. Daneben erfordert der Prozess noch viel Handarbeit und erscheint aus industrieller Sicht noch nicht skalierbar.

Hinzu kommt, dass die von Koch et al. zur Beschichtung der AEM verwendete Zusammensetzung Methanol als Lösemittel für den Haftvermittler enthält. Da Methanol als karzinogen, mutagen oder reproduktionstoxisch bekannt ist, wird dieses Lösemittel gemäß GHS als CMR-Stoff klassifiziert, was bei dessen Verarbeitung entsprechende Sicherheitsmaßnahmen erfordert. Im Labor macht das keine größeren Umstände; im industriellen Produktionsmaßstab ist das aber schon sehr aufwändig und entsprechend kostenintensiv.

Die WO2023088714A1 offenbart eine Zusammensetzung enthaltend ein gelöstes, Anionen leitendes Ionomer und einen Elektrokatalysator. Als Lösemittel das Anionen leitende Polymer enthält die Zusammensetzung Dimethylsulfoxid (DMSO) und zusätzlich ein Ethanol/WasserGemisch als Dispergiermedium. Alle diese Stoffe sind nicht als CMR-relevant klassifiziert. Genutzt wird diese Zusammensetzung, um CCM oder CCS herzustellen, die in der AEMWE eingesetzt werden können. Im Experimentalteil der WO2023088714A1 wird ein Ultraschallsprühbeschichter genutzt, um die Zusammensetzung auf diverse Substrate direkt aufzutragen. Spätere, hier vorgelegte Versuche zeigen, dass eine AEM, die mit dieser Zusammensetzung beschichtet wird, Falten wirft.

Die CN 115832338 A offenbart eine Maschine zur Herstellung einer CCM, die für eine PEM Brennstoffzelle bestimmt ist. Die Maschine führt einen Rolle-zu-Rolle-Prozess aus. Die Temperaturführung ist darauf eingerichtet, das Quellen der Membran zu reduzieren. Das verarbeitete Ionomer leitet ausschließlich Protonen leitend und ist daher für den Einsatz in der AEMWE ungeeignet.

Die EP4223417A1 beschreibt eine Beschichtungszusammensetzung für die Herstellung einer Wasserelektrolysezelle. Die Zusammensetzung enthält einen Nickel-Eisen-(Oxid)Hydroxid als Elektrokatalysator, ein organisches Polymer und ein Lösemittel. In dieser Rezeptur werden Lösemittel und Polymer so ausgewählt, dass die Hansen-Parameter dieser beiden Komponenten einen gewissen geometrischen Abstand zu den Hansen-Parametern des Elektrokatalysators einhalten. In den Beispielen werden unterschiedliche Lösemittelgemische ausprobiert, etwa ein Gemisch aus 1-Propanol und Ethanol oder aus 2-Propanol und Wasser. Die Hansen-Parameter dieser Lösemittel sind in Tabelle 1 dargestellt. Als organisches Polymer dient jeweils Nafion®, das ist ein protonenleitendes Fluorpolymer. Dieses lässt sich in der AEM-basierten Wasserspaltung prinzipbedingt nicht als Ionenleiter einsetzen, weil es keine Hydroxid-Ionen $OH^-$ leitet. Außerdem begegnet es aufgrund seines Fluorgehalts zunehmend Vorbehalte.

Die WO2023183721A2 beschreibt eine Zusammensetzung enthaltend einen auf Kohlenstoff geträgerten Edelmetallkatalysator, wobei als Lösemittel Wasser und mindestens eine Substanz ausgewählt aus 1-Propanol, 2-Propanol, NMP, DMAC, DMSO, DMF, Cyclopentanon enthalten ist. Da die Lösemittel N,N-Dimethylacetamid (DMAC), N,N-Dimethylformamid (DMF) und N-Methyl-2-pyrrolidon (NMP) jeweils als karzinogen oder mutagen oder reproduktionstoxisch bekannt sind, werden sie gemäß GHS allesamt als CMR-Stoff klassifiziert, was - wie bereits erörtert - in der industriellen Verarbeitung kostenintensive Sicherheitsmaßnahmen erfordert. Im Übrigen zielt die in WO2023183721A2 beschriebene Zusammensetzung auf die Herstellung von CCS ab, die in Hochtemperatur-Brennstoffzellen eingesetzt werden. Dies erfordert spezielle, Protonen leitende Ionomere.

Diverse CMR-freie Zusammensetzungen zur Herstellung einer für die AEMWE bestimmten CCM sind in der zum Zeitpunkt der Anmeldung noch nicht offengelegten Europäischen Patentanmeldung Nr. 24159645.1 derselben Anmelderin niedergelegt. Sie enthalten als Lösemittel Dimethylsulfoxid, Ethanol und/oder 2-Propanol mit Acetonitril und Wasser.

Eine weitere, zum Zeitpunkt dieser Anmeldung noch nicht offengelegte Europäische Patentanmeldung Nr. 24152389.3 derselben Anmelderin betrifft ebenfalls eine Zusammensetzung enthaltend Elektrokatalysator, Ionomer und Lösemittel. Bei dem Lösemittel handelt es sich um ein Lösemittelgemisch aus Dimethylsulfoxid, Ethanol und ein bisschen Acetonitril. Auch diese Zusammensetzung ist zur Herstellung einer CCM bestimmt, die in der alkalischen Wasserelektrolyse eingesetzt werden kann.

Noch eine weitere zum Zeitpunkt dieser Anmeldung noch nicht offengelegte Europäische Patentanmeldung Nr. 24169671.5 derselben Anmelderin erwähnt eine Katalysatortinte enthaltend mindestens ein erstes Lösemittel, mindestens ein im ersten Lösemittel gelöstes Polymer, mindestens einen partikulären Elektrokatalysator, der elektrokatalytisch aktiv oder aktivierbar ist, sowie mindestens ein vom Elektrokatalysator unterschiedliches, partikuläres anorganisches Material. Als Lösemittel kommen Dimethylsulfoxid (DMSO), Ethanol (EtOH), Acetonitril (ACN) oder Methanol (MeOH ) in Betracht. Darüber hinaus kann die Katalysatortinte auch ein Dispergiermedium enthalten, wie zum Beispiel Wasser (H2O), N-Methyl-2-pyrrolidon (NMP), N,N-Dimethylacetamid (DMAC), Aceton (ACT), 2-Propanol (IPA). Das besondere an dieser Katalystortinte ist, dass diese zum Auftragen auf ein Transfersubstrat bestimmt ist und nicht zum Auftragen auf eine Anionenaustauschmembran.

In Hinblick auf diesen Stand der Technik lag der Erfindung die Aufgabe zu Grunde, ein Verfahren zur Herstellung einer beschichteten Anionenaustauschmembran durch Direktbeschichtung mit elektrokatalytisch aktivem oder aktivierbaren Material anzugeben, welches die notwendige Ebenheit der AEM erhält und möglichst ohne die Verwendung von

verlorenen Folien auskommt. Die katalytisch beschichtete Anionenaustauschmembranen (CCM) soll in der alkalischen Wasserelektrolyse einsetzbar sein. Um eine verbessere Prozessierbarkeit in der maschinellen Produktion im industriellen Maßstab zu gestatten, soll die Quellung minimiert werden. Darüber hinaus soll das Verfahren mit fluorfreien Ionomeren durchführbar sein und möglichst ohne CMR-Stoffe auskommen.

Gelöst wird diese Aufgabe durch ein Verfahren mit den folgenden, nicht chronologischen Schritten:

a) Bereitstellen einer viskosen Zusammensetzung, welche mindestens die folgenden Komponenten enthält:

i) einen Elektrokatalysator;
ii) ein Lösemittel;
iii) ein Anionen leitendes Polymer;

b) Bereitstellen einer Anionenaustauschmembran, welche mindestens einen Membranwerkstoff enthält;
c) Auftragen der viskosen Zusammensetzung auf die Anionenaustauschmembran;
d) Trocknen der auf die Anionenaustauschmembran aufgetragenen, viskosen Zusammensetzung;
e) Erhalt einer beschichteten Anionenaustauschmembran, welche zumindest einseitig eine Schicht umfassend den Elektrokatalysator und das Anionen leitende Polymer aufweist, wobei der Elektrokatalysator über das Anionen leitende Polymer mit dem Membranwerkstoff verbunden ist;

wobei das Anionen leitende Polymer, der Membranwerkstoff und das Lösemittel so aufeinander abgestimmt ausgewählt sind, dass das Anionen leitende Polymer und der Membranwerkstoff jeweils in dem Lösemittel lösbar sind;
dadurch gekennzeichnet,
dass die viskose Zusammensetzung zusätzlich die folgende Komponente enthält:
iv) eine organische Substanz, die sich von dem Lösemittel unterscheidet;
wobei die nach Hansen bestimmten Löslichkeits-Parameter δD, δP und δH der organischen Substanz in den folgenden Bereichen liegen:

$$15\ MPa^{0.5} < \delta D < 35\ MPa^{0.5}$$

$$6\ MPa^{0.5} < \delta P < 15\ MPa^{0.5}$$

$$2.5\ MPa^{0.5} < \delta H < 7.1\ MPa^{0.5}$$

Ein wesentliches Merkmal der Erfindung ist, dass der Membranwerkstoff, das Anionen leitende Polymer, das Lösemittel und die zusätzlich vorhandene organische Substanz aufeinander abgestimmt ausgewählt werden. Die Abstimmung erfolgt hinsichtlich des Löseverhaltens des Lösemittels in Bezug auf Membranwerkstoff und Anionen leitendes Polymer. Konkret wird das Lösemittel so ausgewählt, dass es sowohl den Membranwerkstoff, als auch das in der Zusammensetzung enthaltende Anionen leitende Polymer löst.

Die Frage der alleinigen Löslichkeit kann durch folgenden Test geklärt werden: In ein Gefäß wird 27 g der zu untersuchenden organischen Substanz und 3 g des zu untersuchenden Anionen leitenden Polymers bzw. Membranwerkstoffes gegeben. Weitere organische Substanzen werden nicht hinzugegeben. Das Gefäß wird verschlossen und bei 60 °C für 4 h geschüttelt. Wenn das Anionen leitende Polymer bzw. der Membranwerkstoff nach dieser Prozedur aufgelöst ist, ist das Anionen leitende Polymer bzw. der Membranwerkstoff in der untersuchten organischen Substanz im Sinne dieser Erfindung allein lösbar. Wenn sich das Anionen leitende Polymer bzw. der Membranwerkstoff bei dieser Behandlung nicht auflöst, ist er in der untersuchten Substanz nicht allein lösbar.

Die Frage, ob sich ein Anionen leitendes Polymer bzw. ein Membranwerkstoff in einer Kombination zweier organischer Substanzen lösen lässt, wird durch diesen Versuch beantwortet:
In ein Gefäß wird 13.5 g der zu untersuchenden ersten organischen Substanz und 13.5 g der zu untersuchenden zweiten organischen Substanz gefüllt. In dieses Gefäß wird 3 g des zu untersuchenden Anionen leitenden Polymers bzw. Membranwerkstoffes hinzugegeben. Weitere organische Substanzen werden nicht hinzugegeben. Das Gefäß wird verschlossen und bei 60 °C für 4 h geschüttelt. Wenn sich das Anionen leitende Polymer bzw. der Membranwerkstoff nach dieser Prozedur aufgelöst hat, ist das Anionen leitende Polymer bzw. der Membranwerkstoff in der Kombination der beiden untersuchten organischen Substanzen im Sinne dieser Erfindung lösbar. Andernfalls ist es nicht lösbar.

Die Erfindung beruht auf der Erkenntnis, dass die Zugabe bestimmter organischer Substanzen in die Zusammensetzung dazu führt, dass diese die Anionenaustauschmembran nicht oder lediglich geringfügig quillt. Die zusätzlich vorhandene organische Substanz wird daher auch als "Antiquellmittel" bezeichnet.

Da es sich bei dem Lösemittel in der Regel auch um eine organische Substanz handelt, enthält die viskose

Zusammensetzung mindestens zwei organische Substanzen, nämlich das Lösemittel und das Antiquellmittel.

Mit Hilfe dieser beiden organischen Substanzen werden innerhalb des Systems der viskosen Zusammensetzung zwei Funktionen erfüllt: Eine erste Funktion besteht darin, das Anionen leitende Polymer zu lösen. Die erste Funktion ist also die eines Lösemittels. Die zweite Funktion besteht darin, das Quellen der Anionenaustauschmembran zu verhindern. Die zweite Funktion ist also die eines Antiquellmittels. Diese beiden Funktionen werden nur während des Beschichtungsvorgangs benötigt. Deswegen werden beide organische Substanzen nach der Beschichtung durch Trocknen verflüchtigt. Das Anionen leitende Polymer fällt dabei aus der Lösung aus und immobilisiert den Elektrokatalysator auf der Anionenaustauschmembran.

Nach dem Trocknen bilden der Elektrokatalysator und das Anionen leitende Polymer die katalytisch aktive Beschichtung der Anionenaustauschmembran. Das Anionen leitende Polymer dient dabei als Haftvermittler, welche den Elektrokatalysator auf der Anionenaustauschmembran immobilisiert, indem es den Elektrokatalysator mit dem Membranwerkstoff verbindet.

Überraschenderweise hat sich heraus gestellt, dass sich als Antiquellmittel geeignete Substanzen in beiden Fällen anhand ihres Löslichkeitsverhaltens identifizieren lassen, genauer gesagt, anhand ihrer nach Hansen bestimmten Löslichkeits-Parameter δD, δP und δH. Diese werden kurz als "Hansen-Parameter" bezeichnet und wurden erstmalig beschrieben von:

Hansen, Charles. M.: The Universality of the Solubility Parameter.
Ind. Eng. Chem. Prod. Res. Dev. 1969, 8, 1, 2-11 DOI 10.1021/i360029a002

Die Hansen-Parameter in Betracht kommender Substanzen sind in der Literatur auffindbar oder lassen sich selbst messen. Die Messtemperatur beträgt 20°C. In Tabelle 1 sind die Hansen-Parameter hier betrachteter Substanzen gelistet. Im Zweifelsfall gelten die Werte der Tabelle 1.

Erfindungsgemäß wird als organische Substanz (Antiquellmittel) ein Stoff ausgewählt, dessen Hansen-Parameter in folgenden Bereichen liegen:

$$15\ MPa^{0.5} < \delta D < 35\ MPa^{0.5}$$

$$6\ MPa^{0.5} < \delta P < 15\ MPa^{0.5}$$

$$2.5\ MPa^{0.5} < \delta H < 7.1\ MPa^{0.5}$$

Diese Forderungen verstehen sich so, dass alle drei Bedingungen kumulativ erfüllt sein müssen. Wenn nur einer der drei Hansen-Parameter δD, δP und δH außerhalb des jeweils oben definierten Bereiches liegt, verfehlt die organische Substanz die erfindungsgemäß beabsichtigte Funktion.

Vorzugsweise gilt zusätzlich $\delta D < 20\ MPa^{0.5}$

Der Effekt, welcher das Quellen der Ionomere verhindert, ist offenbar auf das Löslichkeits- oder Vernetzungsverhalten der zugesetzten organischen Substanz zurückzuführen. Vorteilhaft erscheinen polare Substanzen mit niedriger dipolarer Wechselwirkung und niedriger Energie aus Wasserstoffbrückenbindungen. Aufgrund ihrer Wirkweise werden die zur Rede stehenden organischen Substanzen hier als "Antiquellmittel" bezeichnet.

Konkret empfehlen sich die Substanzen (1S,5R)-6,8-Dioxabicyclo[3.2.1]octan-4-on, Cycloheptanon, Cyclohexanon, Cyclopentanon als organische Substanz (Antiquellmittel). Diese Substanzen weisen nämlich ein vorzügliches Antiquellverhalten auf, sind nicht als CMR-Stoff gelistet und lassen sich teilweise sogar aus nachwachsen Rohstoffen beziehen. Ebenfalls lassen sich Benzonitril, Butanon, Aceton und Acetophenon als Antiquellmittel einsetzen.

Grundsätzlich lassen sich mehrere einzeln geeignete Antiquellmittel auch als ein Antiquellmittelgemisch einsetzen. Falls mehrere Antiquellmittel als Gemisch eingesetzt werden, wird als Gewichtsanteil des Antiquellmittels der Gewichtsanteil des Antiquellmittelgemisches herangezogen. Jedes einzelne in dem Antiquellmittelgemisch enthaltene Antiquellmittel muss die hier definierten Vorgaben hinsichtlich seiner Hansen-Parameter erfüllen.

Erfindungsgemäß sind Antiquellmittel und Lösemittel chemisch nicht identisch. Besonders bevorzugt sind sie auch funktional nicht identisch, was bedeutet, dass das Antiquellmittel nicht zugleich als Lösemittel dienen kann. Deswegen werden vorzugsweise das Anionen leitende Polymer, der Membranwerkstoff und die organische Substanz so aufeinander abgestimmt ausgewählt, dass das Anionen leitende Polymer und der Membranwerkstoff jeweils in der organischen Substanz nicht lösbar sind. Um die Nichtlöslichkeit zu prüfen wird der oben beschriebene Test angewandt.

Die folgenden Lösemittel haben sich für das Anrühren der viskosen Zusammensetzung als besonders vorteilhaft erwiesen: Dimethylsulfoxid, Ethanol, 1-Propanol, 2-Propanol, Acetonitril. Außerdem sind diese Lösemittel CMR-frei. Selbstverständlich können auch mehrere dieser Lösemittel gemeinsam als ein Lösemittelgemisch eingesetzt werden. Für den Gewichtsanteil des Lösemittelgemisches gilt das für ein einzelnes Lösemittel Gesagte entsprechend.

Vorzugsweise ist das Anionen leitende Polymer in dem Lösemittel bzw. dem Lösemittelgemisch vollständig gelöst, wenn die viskose Zusammensetzung bereit gestellt und/oder aufgetragen wird. Dies erleichtert das Auftragen, weil die viskose Zusammensetzung dann nicht klumpig ist. Beim Trocknen verdampft das Lösemittel, sodass das Anionen leitende Polymer aus der Lösung ausfällt.

Neben den vier basalen Komponenten Elektrokatalysator, Lösemittel, Anionen leitenden Polymer und Antiquellmittel kann die erfindungsgemäß eingesetzte, viskose Zusammensetzung noch weitere Komponenten enthalten. Besonders bevorzugt enthält sie zusätzlich noch ein Dispergiermedium, welches sich von dem Lösemittel und dem Antiquellmittel unterscheidet. Als Dispergiermedium empfiehlt sich Wasser. Das Dispergiermedium wird genutzt, um die Viskosität der Zusammensetzung einzustellen. Das Dispergiermedium verflüchtigt sich beim Trocknen zumindest teilweise.

Die katalysatorhaltige, viskose Zusammensetzung, mit der die AEM beschichtet wird, kann unterschiedliche Viskositätsgrade aufweisen: Zum einen ist es denkbar, dass die viskose Zusammensetzung eher pastös ist. Die viskose Zusammensetzung wird dann auch als "Katalysatorpaste" bezeichnet. Eine Katalysatorpaste ist hochviskos. Gleichwohl kann die dynamische Viskosität der viskosen Zusammensetzung auch sehr niedrig sein (dünnflüssig). In dieser Ausprägung ist eher von einer "Katalysatortinte" die Rede.

Es ist auch denkbar, dass sich die Viskosität der Zusammensetzung während der Verarbeitung ändert: So kann die viskose Zusammensetzung als Paste bereit gestellt, jedoch als Tinte aufgetragen werden. Dies ist möglich durch Einstellen der Verarbeitungstemperatur, welche die dynamische Viskosität der viskosen Zusammensetzung stark beeinflusst.

Die dynamische Viskosität $\eta$ kann mit einem Kennwert quantifiziert werden. Der Kennwert der dynamischen Viskosität $\eta$ der Zusammensetzung sollte zwischen $10^1$ mPas und $10^4$ mPas liegen. Die dynamische Viskosität $\eta$ wird bei einer Temperatur von 25°C mit einem Rotationsrheometer mit Platte-Platte-Geometrie gemessen. Der Durchmesser der Platten beträgt 40 mm, der Abstand zwischen den Platten beträgt 1 mm. Die dynamische Viskosität wird bei steigenden Schergeschwindigkeiten zwischen 0.1 $s^{-1}$ und 1000 $s^{-1}$ gemessen, als Kennwert wird die dynamische Viskosität bei 1 $s^{-1}$ herangezogen. Ein geeignetes Rotationsrheometer mit Platte-Platte Geometrie ist beispielsweise bei Malvern Kinexus erhältlich.

Um in die Katalysatorschicht der Anionenaustauschmembran keine Störstoffe einzutragen, welche die Elektrolyse beeinträchtigen könnten, sollte die viskose Zusammensetzung möglichst ausschließlich aus den bisher explizit genannten Komponenten bestehen. Unter Umständen kann es aber dennoch erforderlich sein, eine weitere Komponente in die Zusammensetzung zuzugeben, welche sich von den vorgenannten Komponenten unterscheidet. Dabei kann es sich um organische oder anorganische Additive handeln, etwa um ein Dispergierhilfsmittel oder um ein Rheologiehilfsmittel oder um ein Tensid oder um ein Leitfähigkeitsadditiv handeln. Konkrete Beispiele für weitere Komponenten sind Silica oder Ruß. Der Ruß stellt ein Leitfähigkeitsadditiv dar, Silica eignet sich als Rheologiehilfsmittel.

Vorgaben für eine konkrete Rezeptur für die erfindungsgemäß eingesetzte viskose Zusammensetzung sind in Tabelle 2 niedergelegt.

**Tabelle 2:** Vorgaben für eine konkrete Rezeptur

| Komponente | Minimalanteil (Gew.-%) | Maximalanteil (Gew.-%) |
|---|---|---|
| Elektrokatalysator | 1 | 30 |
| Lösemittel bzw. Lösemittelgemisch | 10 | 40 |
| organische Substanz (Antiquellmittel) | 45 | 90 |
| Anionen leitendes Polymer | 0.1 | 10 |
| Dispergiermedium | 0 | 20 |

Die in Tabelle 2 angegebenen Gewichtsanteile beziehen sich jeweils auf das Gesamtgewicht der viskosen Zusammensetzung. Es versteht sich von selbst, dass die Summe der Gewichtsanteile aller hier gelisteten Komponenten 100 Gew.-% nicht übersteigt. Gleichwohl ist es möglich, dass die Summe der Gewichtsanteile aller hier gelisteten Komponenten unterhalb von 100 Gew.-% liegt, nämlich dann, wenn eine weitere Komponente enthalten ist, die sich von den gelisteten Komponenten unterscheidet.

Vorzugsweise liegt der Elektrokatalysator in partikulärer Form, also als Pulver oder Granulat vor. Pulver ist eine Darreichungsform, die sich durch Zugabe von Polymer, Lösemittel und Antiquellmittel einfach zu einer Katalysatorpaste oder -tinte anrühren lässt.

Der Elektrokatalysator muss mindestens ein elektrokatalytisch aktives Element enthalten, welches die beabsichtigte elektrochemische Reaktion beschleunigt. Beispiele für solche elektrokatalytisch aktiven Elemente sind Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh), Cer (Ce). Diese Elemente können sowohl als in Reinform oder als Oxid oder als Hydroxid oder als Oxidhydroxid oder als Phosphid vorliegen. Neben dem elektrokatalytisch aktiven Element kann der Elektrokatalysator noch ein Trägermaterial enthalten, etwa Kohlenstoff.

In der alkalischen Wasserelektrolyse haben sich insbesondre drei Elektrokatalysatoren bewährt, nämlich Platin bzw. Platinlegierung geträgert auf Kohlenstoff (Pt/C) oder Nickel-Eisen-(Oxid)Hydroxid ($NiFe_aO_bH_c$) oder Nickel-Eisen-Phosphid ($NiFe_aP_b$), wobei es sich bei den Indices a, b, und c jeweils um eine reelle Zahl aus dem Intervall von einschließlich 0 bis einschließlich 8 handelt. Die viskose Zusammensetzung enthält dementsprechend vorzugsweise einen Pt/C - oder einen $NiFe_aO_bH_c$ - oder einen Nickel$NiFe_aP_b$ - Elektrokatalysator.

Aufgrund seiner partikulären Darreichungsform kann der Elektrokatalysator ein große spezifische Oberfläche erreichen. Dies ermöglicht eine gute Zugänglichkeit der katalytisch aktiven Zentren für die Reaktionsteilnehmer, was wiederum die Effizienz der Reaktion erhöht. Außerdem wird der Elektrokatalysator so besser ausgenutzt, weil kaum elektrokatalytisch aktives Material im Innern des Katalysators unerreicht und ungenutzt bleibt. Die Materialkosten für den Elektrokatalysator können so gesenkt werden, was insbesondere bei teuren oder raren Edelmetallkatalysatoren von Interesse ist. Eine große spezifische Katalysatoroberfläche hat daher viele Vorteile. Die spezifische Oberfläche kann einfach dadurch gesteigert werden, dass der partikuläre Elektrokatalysator mit einer besonders feinen Partikelgröße eingesetzt wird. Je feiner die Partikel, desto größer die spezifische Oberfläche. Ebenso ist es möglich, die spezifische Oberfläche des Elektrokatalysators dadurch zu erhöhen, dass poröses Material eingesetzt wird.

Die spezifische Oberfläche des Elektrokatalysators sollte zwischen 0.5 $m^2/g$ und 2000 $m^2/g$ betragen oder zwischen 20 $m^2/g$ und 200 $m^2/g$. Die spezifische Oberfläche wird nach dem von Brunauer-Emmett-Teller beschrieben Verfahren (BET-Verfahren) bestimmt, und zwar durch Stickstoff Adsorption. Das BET-Verfahren kann automatisch durchgeführt werden mit handelsüblichen Partikelanalysatoren, wie etwa mit dem Micromeritics ASAP 2460.

Vorzugsweise wird ein Anionen leitendes Polymer verwendet, welches mindestens eine Struktur enthält, die einer der Formeln (I), (II), (III) entspricht:

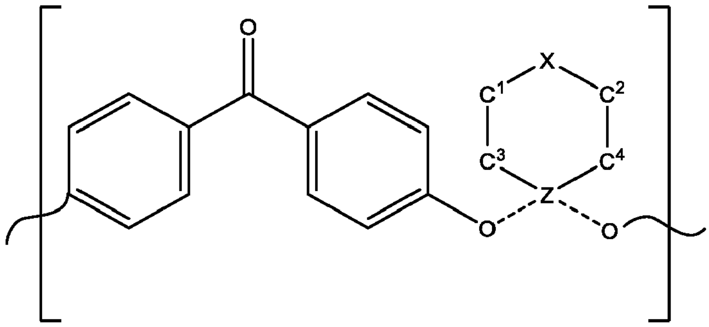

(I)

wobei in (I) X für ein Strukturelement steht, umfassend ein positiv geladenes Stickstoffatom, welches an $C^1$ und $C^2$ gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome

und wobei in (I) Z für ein Strukturelement steht, das ein Kohlenstoffatom umfasst, welches an $C^3$ und $C^4$ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere $C_1$- bis $C_4$-Alkylreste substituiert sein können;

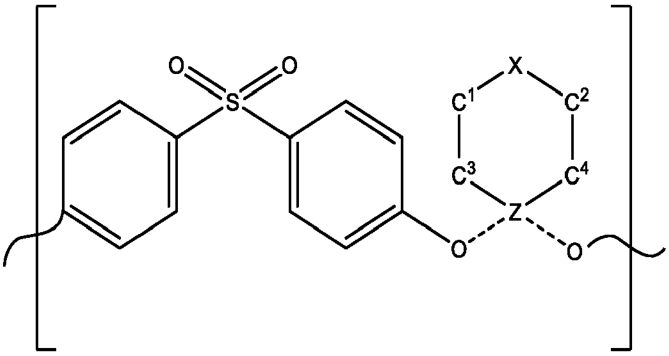

(II)

wobei in (II) X für ein Strukturelement steht, umfassend ein positiv geladenes Stickstoffatom, welches an $C^1$ und $C^2$ gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an $C^3$ und $C^4$ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen $C_1$- bis $C_4$-Alkylreste substituiert sein kann, insbesondere mit einer Methyl-, iso-Propyl- oder tert-Butyl-Gruppe, wobei die Methylgruppe bevorzugt ist;

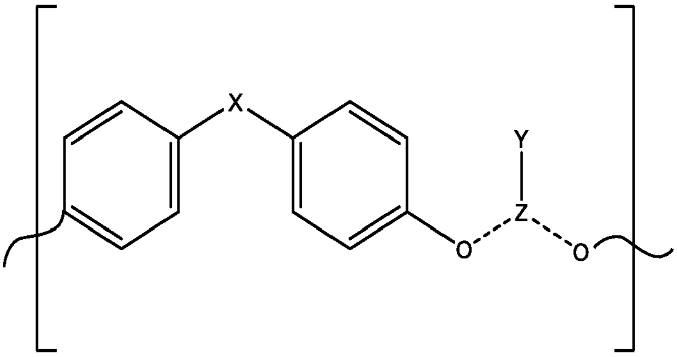

(III)

wobei in (III) X für eine Keton- oder Sulfon-Gruppe steht;

wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;

und wobei in (III) Y für ein Strukturelement steht, welches mindestens ein Stickstoffatom mit positiver Ladung umfasst, wobei dieses Stickstoffatom mit dem Strukturelement Z verbunden ist.

Solche lonomere sind beschrieben in den Patentanmeldungen EP3770201A1, EP4032934A1 und EP4059988A1. Sie weise eine gute Anionenleitfähigkeit auf, quellen kaum und sind frei von Fluor.

Vorzugsweise weisen der Membranwerkstoff und das Anionen leitende Polymer dieselbe Wiederhohleinheit auf oder sind sogar identisch. Insbesondere können lonomere, welche mindestens eine der Strukturen (I), (II) oder (III) enthalten, sowohl als Anionen leitendes Polymer in der Zusammensetzung, als auch als Membranwerkstoff genutzt werden. Das verbessert zum einen die Haftung des Elektrokatalysators auf der Membran und erleichtert zum andern das Abstimmen des Systems aus Anionen leitenden Polymer, Membranwerkstoff, Lösemittel und Antiquellmittel, weil das System dann nur noch drei Dimensionen hat und nicht mehr vier.

Da die katalysatorhaltige Beschichtungszusammensetzung dank des darin enthaltenen Antiquellmittels die AEM kaum quillt, lässt sich die Membran auch ohne aufwändige Fixierung direkt beschichten und einfacher faltenfrei verarbeiten. Insbesondere ist es möglich, die viskose Zusammensetzung ohne Zuhilfenahme von verlorenen Folien wie Transferfolien oder Maskierfolien auf die Anionenaustauschmembran aufzutragen. Dadurch wird Abfall und insbesondere die Herstellung von Fluorpolymeren wie PTFE vermieden.

Ein besonderer Vorteil der hier beschriebenen viskosen Zusammensetzung besteht also darin, dass sie die zu

beschichtete Anionenaustauschmembran nicht oder kaum quellt. Daher eignet sich die viskose Zusammensetzung besonders zur Direktbeschichtung der AEM. Dies bedeutet, dass das Auftragen der viskosen Zusammensetzung auf die Anionenaustauschmembran dadurch erfolgt, dass die viskose Zusammensetzung direkt auf die Anionenaustauschmembran aufgetragen wird, nämlich ohne die Verwendung eines Transfersubstrats, wie es bei den Decal-Verfahren üblich ist.

Insbesondere dann, wenn CMR-freie Antiquellmittel wie beispielsweise Cycloheptanon, (1S,5R)-6,8-Dioxabicyclo[3.2.1]octan-4-on, Cyclohexanon, Cyclopentanon, Benzonitril, Butanon, Aceton, Acetophenon und CMR-freie Lösemittel wie beispielsweise Dimethylsulfoxid, Ethanol, 1-Propanol, 2-Propanol oder Acetonitril genutzt werden, können durch das erfindungsgemäße Herstellungsverfahren Produktionskosten eingespart werden, weil die Sicherheitsanforderungen an die Verarbeitung dieser Stoffe geringer ausfällt. Eine besondere Ausführungsform des Verfahrens sieht daher vor, dass das Lösemittel und das Antiquellmittel zusätzlich so ausgewählt werden, dass sie nicht als cancerogen, mutagen oder reproduktionstoxisch beschrieben sind. Dies ist dann der Fall, wenn die Substanz nicht als CMR-Stoff gemäß dem Global harmonisierten System zur Einstufung und Kennzeichnung von Chemikalien der UN (GHS - englisch: Globally Harmonized System of Classification, Labelling and Packaging of Chemicals). Tabelle 1 führt aus, welche Substanzen als CMR-frei in Betracht kommen. Maßgeblich ist insoweit die GHS in ihrer aktuellen Fassung.

Die Vorteile des erfindungsgemäßen Herstellungsverfahrens wirken sich nicht nur auf die Produktionskosten aus, sondern führen auch zu einem besseren Produkt: Versuche zeigen, dass die Beschichtung mit der hier beschriebenen Zusammensetzung zu einer besseren Effizienz der damit beschichteten AEM führt, was sich auf eine bessere Beschichtungsqualität zurückführen lässt. Eine katalytisch beschichtete AEM, welche durch das erfindungsgemäße Beschichtungsverfahren erhältlich ist, ist daher ebenfalls ein Gegenstand der Erfindung.

Eine erfindungsgemäß beschichtete Anionenaustauschmembran enthält einen Membranwerkstoff und mindestens eine Schicht, welche einen Elektrokatalysator und ein Anionen leitendes Polymer umfasst, wobei der Elektrokatalysator über das Anionen leitende Polymer mit dem Membranwerkstoff verbunden ist. Aufgrund des in der Zusammensetzung enthaltenen Antiquellmittels enthält die erfindungsgemäß beschichtete Anionenaustauschmembran Spuren und/oder Abbauprodukte des Antiquellmittels. Spuren sind beim Trocknen nicht vollständig verdampfte Rückstände des Antiquellmittels. Abbauprodukte entstehen, wenn das Antiquellmittel degradiert. Welche Spuren oder Abbauprodukte sich in der Anionenaustauschmembran vorfinden, hängt von den konkret eingesetzten Antiquellmitteln ab. Vorzugsweise finden sich Spuren oder Abbauprodukte von (1S,5R)-6,8-Dioxabicyclo[3.2.1]octan-4-on oder Cyclohexanon oder Cyclopentanon oder Cycloheptanon oder Benzonitril oder Butanon oder Aceton oder Acetophenon in der erfindungsgemäß beschichteten AEM. Eine solche beschichtete Anionenaustauschmembran ist ein weiterer Gegenstand der Erfindung.

Es steht zu erwarten, dass der Gewichtsanteil des Antiquellmittels oder dessen Abbauproduktes zwischen 0 Gew.-% und 10 Gew.-% beträgt, wobei sich der Gewichtsanteil auf das gesamte Gewicht der beschichteten Anionenaustauschmembran bezieht.

Da die Vorteile der erfindungsgemäß beschichteten Anionenaustauschmembran insbesondere in der AEMWE zu Tage treten, nämlich in einer Verbesserung der Effizienz, ist die Verwendung einer erfindungsgemäßen, katalytisch beschichteten Anionenaustauschmembran in der alkalischen Wasserelektrolyse ein weiterer Gegenstand der Erfindung. Die Verwendung erfolgt dadurch, dass die alkalische Wasserelektrolyse in Anwesenheit des katalytisch beschichteten Anionenaustauschmembran durchgeführt wird. Der in der Beschichtung enthaltene Elektrokatalysator katalysiert dabei die alkalische Wasserelektrolyse. Die Beschichtung kann zugleich als Elektrode dienen. Die Membran und das in der Beschichtung enthaltene Ionomer transportiert Hydroxidionen $OH^-$ aus dem kathodischen Kompartiment der elektrochemischen Zelle in das anodische Kompartiment.

## Beispiele

Im Folgenden wird der Prozess zur Herstellung einer katalytisch beschichteten AEM mit Hilfe einer Platin/Kohlenstoff-basierten viskosen Zusammensetzung beschrieben. Damit werden die mit der Erfindung erzielten Effekte experimentell belegt.

### 1. Herstellung eines Ionomers (nicht Teil der Erfindung)

Ein Anionen leitendes, kationisches Polymer wurde entsprechend Beispiel 3 der EP3770201A1 synthetisiert. Dieses Polymer lag zunächst als Lösung vor und wurde mittels Trocknung zu einem Pulver verarbeitet. Um den Restlösemittelgehalt zu minimieren, wurde das getrocknete Polymer anschließend für 48 h im Vakuumtrockenschrank bei 80 °C weiter getrocknet.

Aus dem trockenen Pulver wurden zwei verschiedene Ionomerlösungen angesetzt, die in den folgenden Beispielen verwendet wurden:

1.1 Herstellung einer 20%-igen Ionomerlösung (nicht Teil der Erfindung)

Erstens wurde eine 20%-ige Ionomerlösung hergestellt, indem 20 Gewichtsanteile des trockenen Polymerpulvers mit 80 Gewichtsanteilen DMSO vermischt wurden. Die Mischung wurde in einem verschlossenen Gefäß zunächst auf 60 °C erwärmt und anschließend 24 h mittels Taumelmischer aufgeschüttelt, bis das Polymer vollständig gelöst war.

1.2 Herstellung einer 12%-igen Ionomerlösung (nicht Teil der Erfindung)

Zweitens wurde eine 12%-ige Ionomerlösung hergestellt, in dem die zuvor hergestellte 20%-ige Lösung unter Zugabe von Acetonitril und Ethanol in gleichen Gewichtsanteilen auf 12 Gew.-% weiter herunterverdünnt wurde. Die Massenanteile in der Lösung betrugen 12 Gewichtsanteile Polymer, 48 Gewichtsanteile DMSO, und jeweils 20 Gewichtsanteile Acetonitril sowie Ethanol. Um eine vollständige Vermischung zu gewährleisten, wurde das verschlossene Gefäß ebenfalls für 24h im Taumelmischer aufgeschüttelt.

2. Versuch zur Löslichkeit des Ionomers in Ethanol, 1-Propanol und 2-Propanol

Hierfür wurden drei Gefäße vorbereitet, das erste mit 27 g Ethanol, das zweite mit 27 g 1-Propanol und das dritte mit 27 g 2-Propanol. Diesen Gefäßen wurden jeweils 3 g des aus Beispiel 1 synthetisierten, kationischen Polymerpulvers hinzugegeben, die Gefäße wurden verschlossen und bei 60 °C für 4 h geschüttelt. Das Resultat war jeweils ein leicht aufgequollener, erweichter Klumpen des Polymers am Boden des Gefäßes welcher sich nicht signifikant aufgelöst hatte.

3. Versuch zur Löslichkeit des Ionomers in Acetonitril

Hierfür wurde 3 g des aus Beispiel 1 synthetisierten, kationischen Polymerpulvers in ein Gefäß mit 27 g Acetonitril gegeben und bei 60 °C für 4 h geschüttelt. Das Resultat war, dass auch hierbei keine signifikante Auflösung des Polymers sichtbar war.

4. Versuch zur Löslichkeit des Ionomers in einem Gemisch aus Ethanol bzw. 1-Propanol bzw. 2-Propanol in Verbindung mit Acetonitril

Hierfür wurden drei Gefäße vorbereitet, das erste mit 13.5 g Ethanol und 13.5 g Acetonitril, das zweite mit 13.5 g 1-Propanol und 13.5 g Acetonitril und das Dritte mit 13.5 g 2-Propanol und 13.5 g Acetonitril. Diesen Gefäßen wurden jeweils 3 g des aus Beispiel 1 synthetisierten, kationischen Polymerpulvers hinzugegeben und bei 60 °C für 4 h geschüttelt. Das Resultat war, eine nahezu klare Lösung. Das Polymer hatte sich in allen drei Gefäßen aufgelöst.

5. Zwischenergebnis: Löslichkeitsverhalten des Ionomers

Das untersuchte Ionomer lässt sich in einem Lösemittelgemisch aus Ethanol und Acetonitril lösen, nicht aber in Ethanol oder Acetonitril allein. Gleiches gilt für das Gemisch 1-Propanol mit Acetonitril bzw. das Gemisch 2-Propanol mit Acetonitril.

6. Herstellung einer Anionenaustauschmembran (nicht Teil der Erfindung)

Aus dem in Beispiel 1 synthetisierten, kationischen Polymer wurde eine Anionen leitende Membran hergestellt, wie in Beispiel 4 der EP3770201A1 beschrieben. Hierfür wurde die Polymerlösung vor der Trocknung verwendet.

7. Bereitstellen einer Zusammensetzung ohne Antiquellmittel (nicht Teil der Erfindung)

Aus dem in Beispiel 1 synthetisierten, kationischen Polymer wurde eine viskose Zusammensetzung wie in WO2023088714 Beispiel 12 beschrieben hergestellt:
Das Ionomer wurde zunächst unter Rühren und Temperatur (60 °C) über 16 h in Dimethylsulfoxid gelöst. Anschließend wurde der Platin auf Kohlenstoff (Pt/C, -50wt%) Katalysator im Dispergiermittel, bestehend aus gleichen Volumenteilen Wasser und Ethanol, unter Ultraschall (BRANSONICTM B-1200 E2 der Firma Branson Ultrasonics Corporation, Brookfield, CT, US) für 30 min im Eisbad und einer Leistung von 30 W dispergiert. Nach Zugabe der Ionomerlösung erfolgt eine weitere Dispersion mittels Ultraschalls im Eisbad für 1 min bei einer Leistung von 30 W und einer Dispergierung mit einem Schüttler (MS1 Minishaker der Firma IKA, Staufen, DE) für 10 s bei 2500 rpm. Die Anteile wurden entsprechend Tabelle 1, Beispiel 12 ausgewählt. Also wurde der Feststoffanteil auf 11 mg/ml festgelegt, wobei die Pt/C Katalysatorpartikel 3 Massenanteile und der Ionomerfeststoff 1 Massenanteil betrug. Dies resultierte in eine niedrigviskose Zusammensetzung.

8. Bereitstellen einer Zusammensetzung mit Antiquellmittel (Teil der Erfindung)

Als erfinderische Zusammensetzung wurde 20.9 g katalysatorhaltiger Tinte angesetzt. Hierfür wurde zunächst 3 g Pt/C (Pt ~ 50wt%) in ein bruchsicheres Gefäß (Volumen 100 ml) unter Sauerstoffausschluss eingewogen, anschließend 8.6 g (1S,5R)-6,8-Dioxabicyclo[3.2.1]octanon-4-on (Cyrene®, Sigma Aldrich, Germany), 0.5 g DMSO, 1 g Ethanol, 1 g Acetonitril sowie 4.3 g Cyclopentanon hinzugefügt. Schließlich wurden 30 g Yttriumstabilisierte Zirkonmahlkugeln hinzugegeben. Das Gemenge wurde in einem Schüttelmischer (Lau, Germany) für 2 Stunden dispergiert. Anschließend wurde 2.5 g Ionomerlösung (20 wt% in DMSO - Beispiel 1.1) hinzugegeben und final für 5 Minuten mittels Schüttelmischer aufgeschüttelt.

In diesem Beispiel bilden DMSO, EtOH und ACN ein Lösemittelgemisch. Cyrene® und Cyclopentanon bilden ein Antiquellmittelgemisch.

9. Beschichtung einer Membran mit der herkömmlichen Zusammensetzung ohne Antiquellmittel (nicht Teil der Erfindung)

Für den Referenzversuch mit der herkömmlichen Formulierung aus WO2023088714 Beispiel 12 wurde die unter 7. bereitgestellte Zusammensetzung mittels automatischen Rakel (Elcometer 4340, Vorschub 5 mm /s, Spiralrakel, 60 μm) auf die in Beispiel 6 hergestellte Membran aufgetragen. Anschließend wurde die beschichtete Membran für 15 min bei 80 °C im Laborofen getrocknet. Das Resultat ist eine CCM, die in Figur 1 zu sehen ist.

Fig. 1: Membran mit herkömmlicher Zusammensetzung beschichtet

Bei der Beschichtung hat sich die Membran stark gewellt wodurch eine inhomogene Beschichtung entstand, die sich jedoch trotzdem prinzipiell als Elektrode zur Wasserelektrolyse eignet.

10. Beschichtung einer Membran mit der Zusammensetzung mit Antiquellmittel (Teil der Erfindung)

Für die erfinderische Direktbeschichtung mittels antiquellmittelhaltiger Formulierung wurde die unter 8. bereitgestellte Zusammensetzung mittels automatischen Rakel (Elcometer 4340, Vorschub 5 mm /s, Spiralrakel, 60 μm) auf die in Beispiel 6 hergestellte Membran aufgetragen. Anschließend wurde die beschichtete Membran für 15 min bei 80 °C im Laborofen getrocknet. Das Resultat ist eine CCM, die in Figur 2 zu sehen ist.

Fig. 2: Membran mit erfinderischer Zusammensetzung beschichtet

Bei der Beschichtung hat sich die Membran nur marginal gewellt wodurch eine homogene Beschichtung entstand, die sich als Elektrode zur Wasserelektrolyse eignet.

11. Beschichtung einer alternativen, kommerziellen Membran mit der Zusammensetzung mit Antiquellmittel (Teil der Erfindung)

Als erfinderische Zusammensetzung wurde 23.5 g katalysatorhaltiger Tinte angesetzt. Hierfür wurde zunächst 3 g Pt/C (Pt ~ 50wt%) in ein bruchsicheres Gefäß (Volumen 100 ml) unter Sauerstoffausschluss eingewogen, anschließend 18.0 g Cyclopentanon hinzugefügt. Schließlich wurden 30 g Yttrium stabilisierte Zirkonmahlkugeln hinzugegeben. Das Gemenge wurde in einem Schüttelmischer (Lau, Germany) für 2 Stunden dispergiert. Anschließend wurde 3.0 g der in 1.2 beschriebenen 12%-igen Ionomerlösung 12 wt% (12% Polymer, 48% DMSO, 20 % Ethanol, 20 % Acetonitril) hinzugegeben und final für 5 Minuten mittels Schüttelmischer aufgeschüttelt.

In diesem Beispiel bilden DMSO, EtOH und ACN ein Lösemittelgemisch. Das Antiquellmittel ist Cyclopentanon.

Für die erfinderische Direktbeschichtung mittels antiquellmittelhaltiger Formulierung wurde die in diesem Beispiel beschriebene Zusammensetzung mittels automatischen Rakel (Elcometer 4340, Vorschub 5 mm/s, Spiralrakel, 60 μm) auf eine kommerzielle Anionenaustauschmembran (FAA-3-50, Fumatech BWT GmbH, Deutschland) aufgetragen. Anschließend wurde die beschichtete Membran für 15 min bei 80 °C im Laborofen getrocknet. Das Resultat ist eine CCM, die in Figur 3 A zu sehen ist.

Fig. 3 A: Kommerzielle Anionenaustauschmembran mit erfinderischer Zusammensetzung beschichtet

Bei der Beschichtung hat sich die Membran nur marginal gewellt wodurch eine homogene Beschichtung

entstand, die sich als Elektrode zur Wasserelektrolyse eignet.

12. Beschichtung der alternativen, kommerziellen Membran mit einer herkömmlicher Zusammensetzung ohne Antiquellmittel (nicht Teil der Erfindung)

Als nicht erfinderische Zusammensetzung wurde 10.0 g katalysatorhaltiger Tinte angesetzt. Hierfür wurde zunächst 2.0 g Pt/C (Pt ~ 50wt%) in ein bruchsicheres Gefäß (Volumen 100 ml) unter Sauerstoffausschluss eingewogen, anschließend 3.0 g Wasser und 1 g DMSO sowie 4.0 g der in 1.2 beschriebenen, 12%-igen Ionomerlösung 12 wt% (12% Polymer, 48% DMSO, 20 % Ethanol, 20 % Acetonitril) hinzugegeben. Schließlich wurden 30 g Yttriumstabilisierte Zirkonmahlkugeln hinzugegeben. Das Gemenge wurde in einem Schüttelmischer (Lau, Germany) für 2 Stunden dispergiert.

In diesem Beispiel bilden DMSO, EtOH und ACN ein Lösemittelgemisch. Es wurde kein Antiquellmittel verwendet.

Für die nicht erfinderische Direktbeschichtung wurde die in diesem Beispiel beschriebene Formulierung mittels automatischen Rakel (Elcometer 4340, Vorschub 5 mm /s, Spiralrakel, 60 μm) auf eine kommerzielle Anionenaustauschmembran (FAA-3, Fumatech BWT GmbH, Deutschland) aufgetragen. Anschließend wurde die beschichtete Membran für 15 min bei 80 °C im Laborofen getrocknet. Das Resultat ist eine CCM, die in Figur 3 B zu sehen ist.

Fig. 3 B: Kommerzielle Anionenaustauschmembran mit herkömmlicher Zusammensetzung beschichtet

Bei der Beschichtung hat sich die Membran deutlich stärker gewellt im Vergleich zu der in Figur 3A gezeigten Membran wodurch eine weniger homogene Beschichtung entstand.

13. Testung der beschichteten Membranen in einer Elektrolvsetestzelle

Die katalytisch beschichteten Membrane aus den Beispielen 9 und 10 wurden in einer Elektrolysezelle mit Aktivfläche von 25 $cm^2$ getestet. Hierbei diente die Katalysatorschicht als Kathodenkatalysator. Anodenseitig wurde eine formstabile poröse Edelstahlelektrode verwendet. Die Messzelle wurde während der Elektrolyseversuche auf 60 °C temperiert und anoden- sowie kathodenseitig mit 1 M KOH Lösung durchspült. Die charakteristische Strom-Spannungskennlinien sind in Figur 4 aufgezeichnet. Die zugehörige Legende findet ist Tabelle 3.

Fig. 4: Strom-/Spannungskennlinien

Tabelle 3: Legende für Figur 4

| Membran | Qualifizierung | Markierunq | Linie |
|---|---|---|---|
| 9 | nicht erfinderisch | leere Rauten | gestrichelt |
| 10 | erfinderisch | ausgefüllte Kreise | durchgezogen |

Bei den Graphen wurde die benötigte Spannung gegen die extern angelegten Stromstärke aufgetragen. Bei einer konstanten Stromstärke (z.B. 1000 $mA/cm^2$) ist eine niedrige Spannung zu bevorzugen, da hierbei die benötigte elektrische Energie zur Produktion dergleichen Menge Wasserstoff, bei gleicher Herstellungsrate, sinkt und dadurch die Effizienz ansteigt. Besonders relevant für industrielle Anwendung sind die Stromstärken über 500 mA /$cm^2$. Es ist zu erkennen, dass die Strom-Spannungskennlinie bei den höheren Stromdichten bei der erfinderisch hergestellten CCM niedriger ist als die der zur Referenz hergestellten (nicht erfinderischen) CCM. Die geringere Stromdichte resultiert bei gleicher Spannung in einer geringeren Leistungsaufnahme, sodass der spezifische Energiebedarf der erfindungsgemäß hergestellten CCM geringer ist.

14. Fazit

Aus dem Vergleich der Strom-Spannungskennlinien der Figur 4 ist ersichtlich, dass die erfindungsgemäß mit Antiquellmittel-haltiger Zusammensetzung hergestellte CCM in einer alkalischen Wasserspaltung eine höhere Effizienz erzielt als die CCM, welche mit herkömmlicher, antiquellmittel-freier Zusammensetzung beschichtet wurde. Die höhere Effizienz kann dadurch erklärt werden, dass die Beschichtung homogener erfolgte und durch die erhöhte Viskosität eine etwas dickere Katalysatorschicht aufgetragen werden konnte.

**Anhang**

Tabelle 1: Hansen-Parameter verschiedener Substanzen bei 20°C in $MPa^{0.5}$, deren CMR-Klassifizierung* und Eignung, als Antiquellmittel zu fungieren

| Substanz | CMR* | δD | δP | δH | als Antiquellmittel |
|---|---|---|---|---|---|
| Cycloheptanon | nein | 17.2 | 10.6 | 4.8 | geeignet |
| Cyclohexanon | nein | 17.8 | 8.4 | 5.1 | geeignet |
| (1S,5R)-6,8-Dioxabicyclo [3.2.1] octan-4-on | nein | 18.8 | 10.6 | 6.9 | geeignet |
| Cyclopentanon | nein | 17.9 | 11.9 | 5.2 | geeignet |
| Propylencarbonat | nein | 20.0 | 18.0 | 4.1 | ungeeignet |
| Acetonitril | nein | 15.3 | 18.0 | 6.1 | ungeeignet |
| Benzonitril | nein | 18.8 | 12.0 | 3.3 | geeignet |
| Dimethylsulfoxid | nein | 18.4 | 16.4 | 10.2 | ungeeignet |
| Polyethylenglykol 400 | nein | 17.9 | 4.0 | 13.9 | ungeeignet |
| Wasser | nein | 15.5 | 16.0 | 42.3 | ungeeignet |
| Ethanol | nein | 15.8 | 8.8 | 19.4 | ungeeignet |
| N-Methyl-2-pyrrolidon | ja | 18.0 | 12.3 | 7.2 | ungeeignet |
| 1-Propanol | nein | 16.0 | 6.8 | 17.4 | ungeeignet |
| 2-Propanol | nein | 15.8 | 6.1 | 16.4 | ungeeignet |
| Methanol | ja | 14.7 | 12.3 | 22.3 | ungeeignet |
| Butanon | nein | 16.0 | 9.0 | 5.1 | geeignet |
| Aceton | nein | 15.5 | 10.4 | 7.0 | geeignet |
| 1-Butanol | nein | 16.0 | 5.7 | 15.8 | ungeeignet |
| Glycerin | nein | 17.4 | 11.3 | 27.2 | ungeeignet |
| 1,2-Propandiol | nein | 16.8 | 10.4 | 21.3 | ungeeignet |
| Ethylenglycol | ja | 17.0 | 11.0 | 26.0 | ungeeignet |
| 1,4-Dioxan | ja | 17.5 | 1.8 | 9.8 | ungeeignet |
| Furfurylalkohol | ja | 17.4 | 7.6 | 15.1 | ungeeignet |
| N,N-Dimethylformamid | ja | 17.4 | 13.7 | 11.3 | ungeeignet |
| Dimethylacetamid | ja | 16.8 | 11.5 | 9.4 | ungeeignet |
| Acetophenon | nein | 18.8 | 9.0 | 4.0 | geeignet |
| *CMR Klassifizierung gemäß GHS08. Die Angaben zur CMR Klassifizierung dienen ausschließlich Zwecken dieser Anmeldung. Substanzen, deren CMR-Status verneint wird, sind nicht notwendigerweise unbedenklich. Insbesondere können diese Daten nicht dafür herangezogen werden, gefahrstoffrechtlich relevantes Tun oder Unterlassen zu begründen. | | | | | |

**Patentansprüche**

**1.** Verfahren zur Herstellung einer beschichteten Anionenaustauschmembran, mit den folgenden, nicht chronologischen Schritten:

a) Bereitstellen einer viskosen Zusammensetzung, welche mindestens die folgenden Komponenten enthält:

i) einen Elektrokatalysator;
ii) ein Lösemittel;
iii) ein Anionen leitendes Polymer;

b) Bereitstellen einer Anionenaustauschmembran, welche mindestens einen Membranwerkstoff enthält;
c) Auftragen der viskosen Zusammensetzung auf die Anionenaustauschmembran;
d) Trocknen der auf die Anionenaustauschmembran aufgetragenen, viskosen Zusammensetzung;
e) Erhalt einer beschichteten Anionenaustauschmembran, welche zumindest einseitig eine Schicht umfassend den Elektrokatalysator und das Anionen leitende Polymer aufweist, wobei der Elektrokatalysator über das Anionen leitende Polymer mit dem Membranwerkstoff verbunden ist;
wobei das Anionen leitende Polymer, der Membranwerkstoff und das Lösemittel so aufeinander abgestimmt ausgewählt sind, dass das Anionen leitende Polymer und der Membranwerkstoff jeweils in dem Lösemittel lösbar sind;
**dadurch gekennzeichnet,**
**dass** die viskose Zusammensetzung zusätzlich die folgende Komponente enthält:
iv) eine organische Substanz, die sich von dem Lösemittel unterscheidet;
wobei die nach Hansen bestimmten Löslichkeits-Parameter $\delta D$, $\delta P$ und $\delta H$ der organischen Substanz in den folgenden Bereichen liegen:

$$15\ MPa^{0.5} < \delta D < 35\ MPa^{0.5}$$

$$6\ MPa^{0.5} < \delta P < 15\ MPa^{0.5}$$

$$2.5\ MPa^{0.5} < \delta H < 7.1\ MPa^{0.5}$$

**2.** Verfahren nach Anspruch 1, wobei die organische Substanz ausgewählt ist aus der Gruppe bestehend aus den folgenden Substanzen: (1S,5R)-6,8-Dioxabicyclo[3.2.1]octan-4-on, Cyclopentanon, Cyclohexanon, Cycloheptanon, Benzonitril, Aceton, Butanon, Acetophenon.

**3.** Verfahren nach Anspruch 1 oder 2, **dadurch gekennzeichnet, dass** das Lösemittel ausgewählt ist aus der Gruppe bestehend aus den folgenden Substanzen:
Dimethylsulfoxid, Ethanol, Methanol, 1-Propanol, 2-Propanol, Acetonitril.

**4.** Verfahren nach Anspruch 3, **dadurch gekennzeichnet, dass** es sich bei dem Lösemittel um ein Lösemittelgemisch handelt, welches mehrere aus der genannten Gruppe ausgewählte Substanzen enthält.

**5.** Verfahren nach einem der Ansprüche 1 bis 4, **dadurch gekennzeichnet, dass** das Anionen leitende Polymer in dem Lösemittel bzw. dem Lösemittelgemisch vollständig gelöst ist.

**6.** Verfahren nach einem der Ansprüche 1 bis 5, **dadurch gekennzeichnet, dass** der Elektrokatalysator in partikulärer Form vorliegt und mindestens ein Element enthält, welches aus der Gruppe bestehend aus den folgenden Elementen ausgewählt ist: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh), Cer (Ce), wobei das Element in seiner Reinform oder als Oxid oder als Hydroxid oder als Oxidhydroxid oder als Phosphid vorliegt.

**7.** Verfahren nach Anspruch 6, **dadurch gekennzeichnet, dass** es sich bei dem Elektrokatalysator um Platin bzw. Platinlegierung geträgert auf Kohlenstoff (Pt/C) oder um ein Nickel-Eisen-(Oxid)Hydroxid ($NiFe_aO_bH_c$) oder im ein Nickel-Eisen-Phosphid ($NiFe_aP_b$) handelt, wobei es sich bei den Indices a, b, und c jeweils um eine reelle Zahl aus dem Intervall von einschließlich 0 bis einschließlich 8 handelt.

**8.** Verfahren nach einem der Ansprüche 1 bis 7, **dadurch gekennzeichnet, dass** die viskose Zusammensetzung zusätzlich noch die folgende Komponente aufweist:
v) ein Dispergiermedium;
wobei das Dispergiermedium weder mit dem Lösemittel bzw. dem Lösemittelgemisch noch mit der organischen Substanz identisch ist.

**9.** Verfahren nach Anspruch 8, **dadurch gekennzeichnet, dass** es sich bei dem Dispergiermedium um Wasser handelt.

**10.** Verfahren nach einem der Ansprüche 1 bis 9, **dadurch gekennzeichnet, dass** die jeweils auf das Gesamtgewicht der viskosen Zusammensetzung bezogenen Gewichtsanteile der Komponenten in den folgenden Bereichen liegen, unter der Maßgabe, dass die Summe der Gewichtsanteile aller hier gelisteten Komponenten 100 Gew.-% nicht übersteigt:

| Komponente | Minimalanteil (Gew.-%) | Maximalanteil (Gew.-%) |
|---|---|---|
| Elektrokatalysator | 1 | 30 |
| Lösemittel | 10 | 40 |
| Organische Substanz | 45 | 90 |
| Anionen leitendes Polymer | 0.1 | 10 |
| Dispergiermedium | 0 | 20 |

**11.** Verfahren nach einem der Ansprüche 1 bis 10 zusätzlich enthaltend mindestens ein Additiv, wobei das Additiv ausgewählt ist aus der Gruppe bestehend aus den folgenden Additiven: Rheologiehilfsmittel, Leitfähigkeitsadditiv.

**12.** Verfahren nach Anspruch 11, **dadurch gekennzeichnet, dass** es sich bei dem Additiv um Silica oder um Ruß handelt.

**13.** Verfahren nach Anspruch einem der Ansprüche 1 bis 12, wobei die viskose Zusammensetzung eine dynamische Viskosität $\eta$ aufweist, für welche nach der in der Beschreibung definierten Methode ein Kennwert bestimmt ist, **dadurch gekennzeichnet, dass** der Kennwert der dynamischen Viskosität $\eta$ zwischen 10 mPas und $10^4$ mPas liegt.

**14.** Verfahren nach einem der Ansprüche 1 bis 13, **dadurch gekennzeichnet, dass** Anionen leitende Polymer mindestens eine Struktur enthält, die einer der Formeln (I), (II), (III) entspricht:

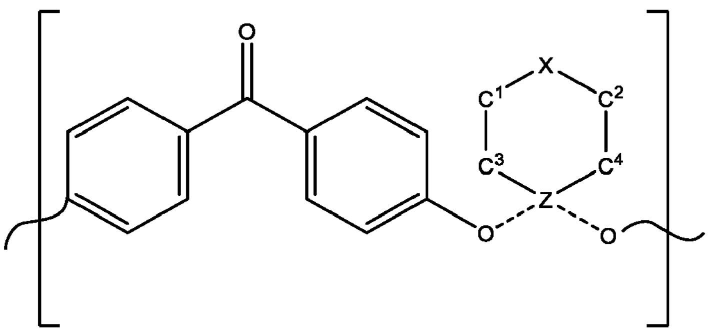

(I)

wobei in (I) X für ein Strukturelement steht, umfassend ein positiv geladenes Stickstoffatom, welches an $C^1$ und $C^2$ gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an $C^3$ und $C^4$ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere $C_1$- bis $C_4$-Alkylreste substituiert sein können;

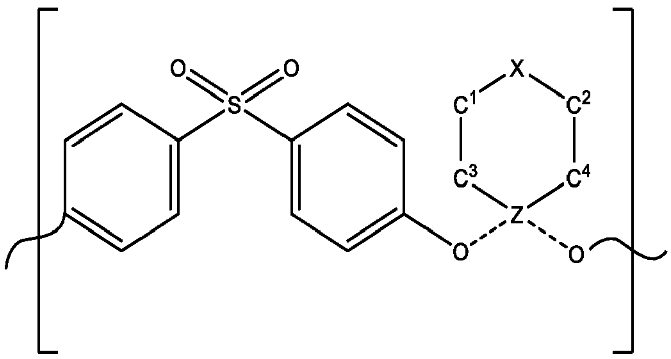

(II)

wobei in (II) X für ein Strukturelement steht, umfassend ein positiv geladenes Stickstoffatom, welches an $C^1$ und $C^2$ gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an $C^3$ und $C^4$ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen $C_1$- bis $C_4$-Alkylreste substituiert sein kann, insbesondere mit einer Methyl-, iso-Propyl- oder tert-Butyl-Gruppe, wobei die Methylgruppe bevorzugt ist;

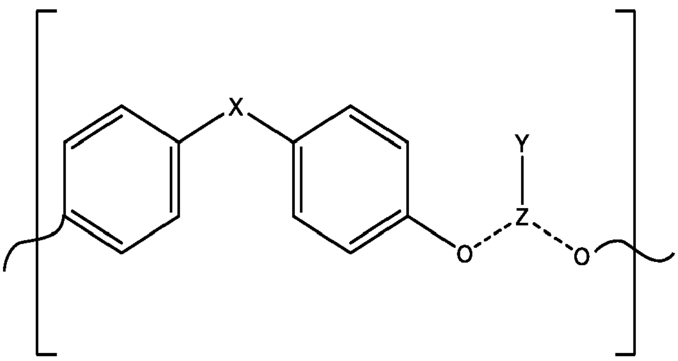

(III)

wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindestens ein Stickstoffatom mit positiver Ladung umfasst, wobei dieses Stickstoffatom mit dem Strukturelement Z verbunden ist.

15. Verfahren nach einem der Ansprüche 1 bis 14, **dadurch gekennzeichnet, dass** der Membranwerkstoff und das Anionen leitende Polymer dieselbe Wiederholeinheit aufweisen oder identisch sind.

16. Verfahren nach einem der Ansprüche 1 bis 15, **dadurch gekennzeichnet, dass** weder das Lösemittel bzw. das Lösemittelgemisch noch die organische Substanz cancerogen oder mutagen oder reproduktionstoxisch ist.

17. Verfahren nach einem Ansprüche 1 bis 16, bei dem der Schritt
c) Auftragen der viskosen Zusammensetzung auf die Anionenaustauschmembran; dadurch erfolgt, dass die viskose Zusammensetzung direkt auf die Anionenaustauschmembran aufgetragen wird, nämlich ohne die Verwendung eines Transfersubstrats.

18. Verfahren nach einem Ansprüche 1 bis 17, wobei das Anionen leitende Polymer, der Membranwerkstoff und die organische Substanz so aufeinander abgestimmt ausgewählt sind, dass das Anionen leitende Polymer und der Membranwerkstoff jeweils in der organischen Substanz nicht lösbar sind.

19. Beschichtete Anionenaustauschmembran enthaltend einen Membranwerkstoff und mindestens eine Schicht, welche einen Elektrokatalysator und ein Anionen leitendes Polymer umfasst, wobei der Elektrokatalysator über das Anionen leitende Polymer mit dem Membranwerkstoff verbunden ist, **dadurch gekennzeichnet, dass** die beschichtete Anionenaustauschmembran Spuren einer Substanz enthält, welche ausgewählt ist aus der Gruppe bestehend aus den folgenden Substanzen: (1S,5R)-6,8-Dioxabicyclo[3.2.1]octan-4-on, Cyclopentanon, Cyclohexanon, Cycloheptanon, Benzonitril, Aceton, Butanon, Acetophenon.

**20.** Beschichtete Anionenaustauschmembran nach Anspruch 19, wobei der Gewichtsanteil der Spuren bezogen auf das gesamte Gewicht der beschichteten Anionenaustauschmembran zwischen 0 Gew.-% und 10 Gew.-% beträgt.

**21.** Beschichtete Anionenaustauschmembran nach Anspruch 19 oder 20, erhältlich durch ein Verfahren gemäß einem der Ansprüche 2 bis 18.

**22.** Herstellung von Wasserstoff und Sauerstoff durch alkalische Wasserelektrolyse, **gekennzeichnet durch** die Anwesenheit einer beschichteten Anionenaustauschmembran nach Anspruch 19, 20 oder 21.

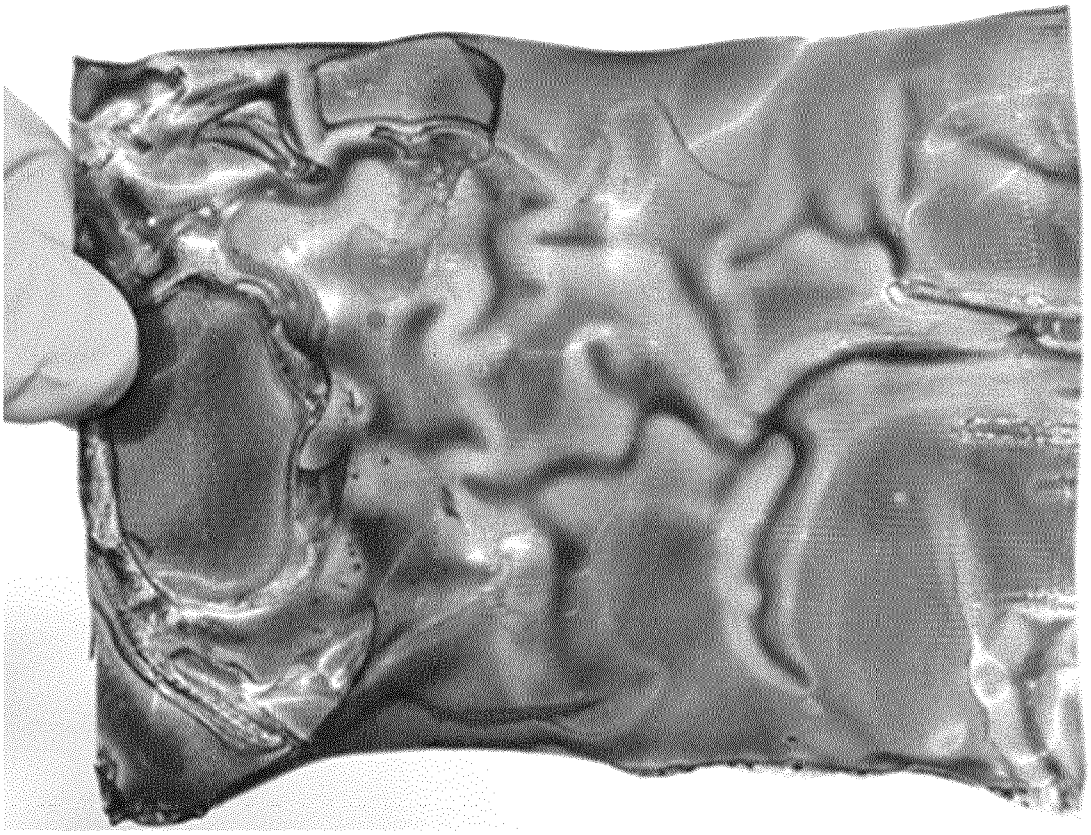

Fig. 1
(nicht erfinderisch)

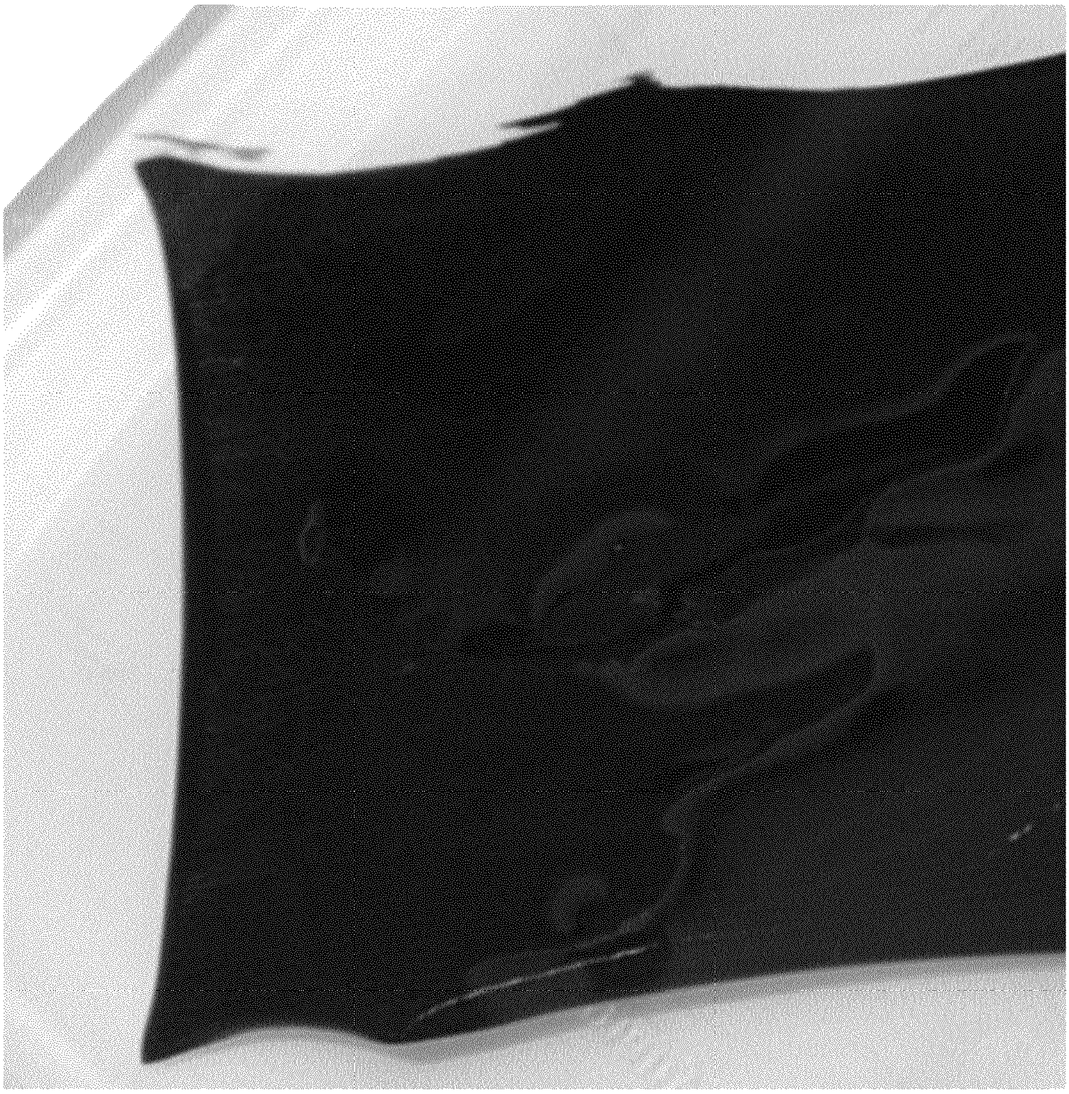

Fig. 2

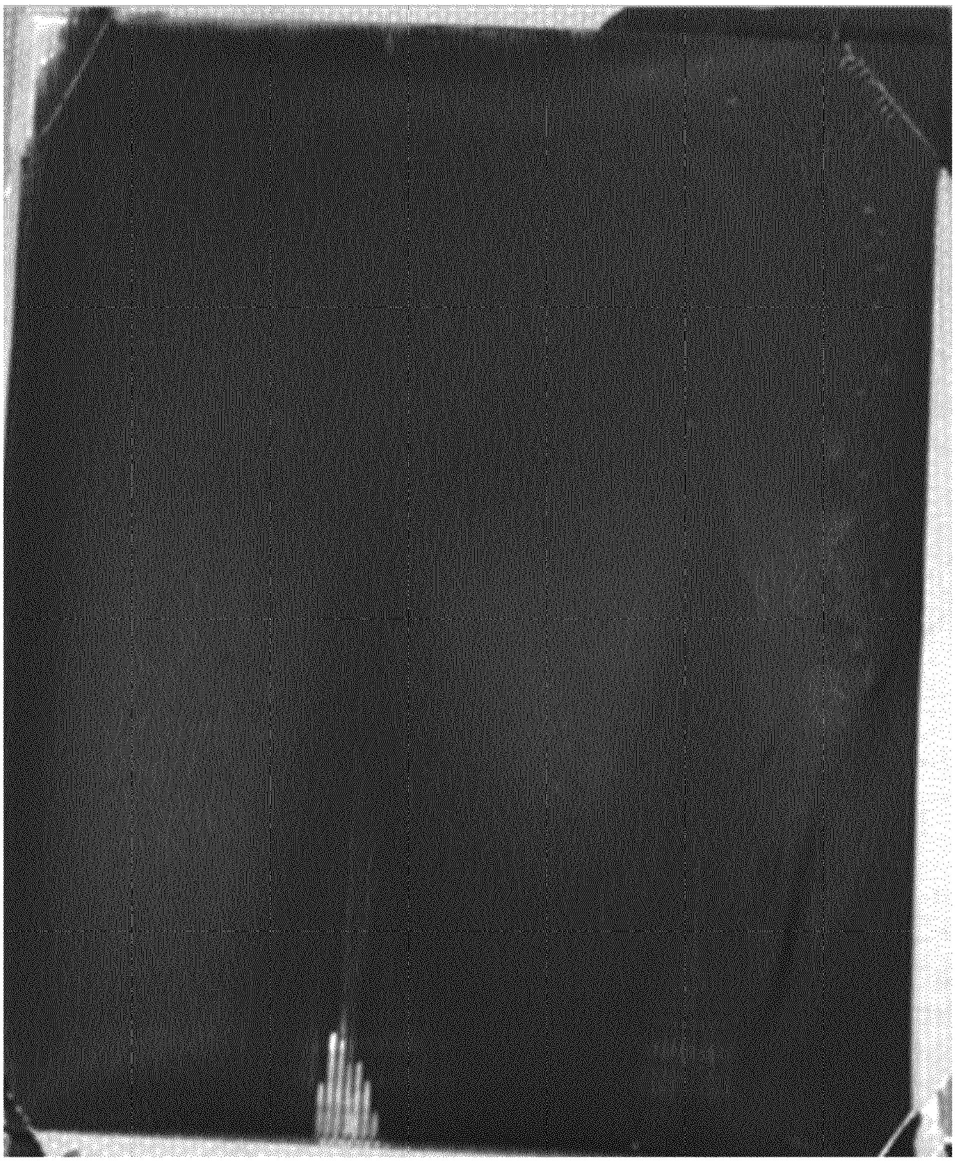

Fig. 3 A

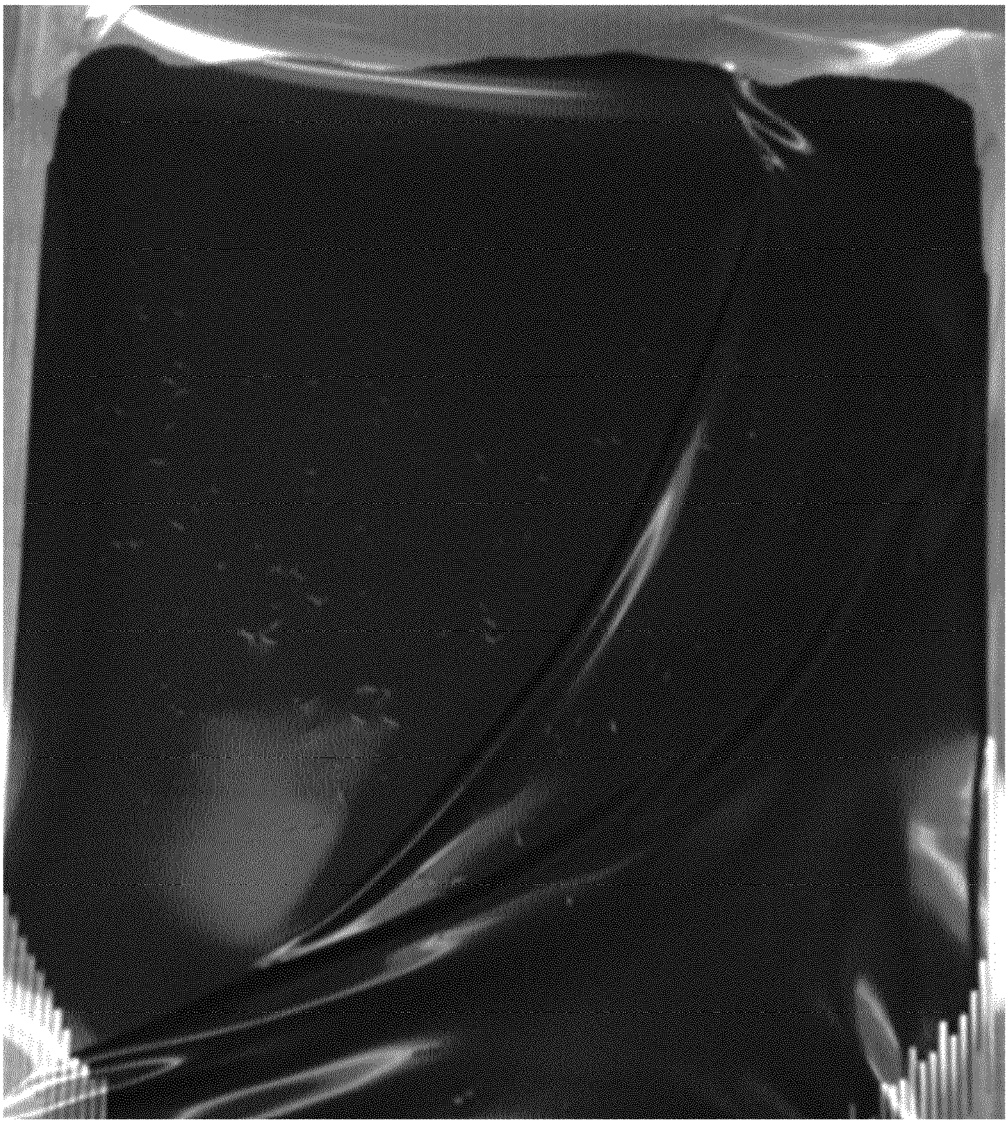

Fig. 3 B
(nicht erfinderisch)

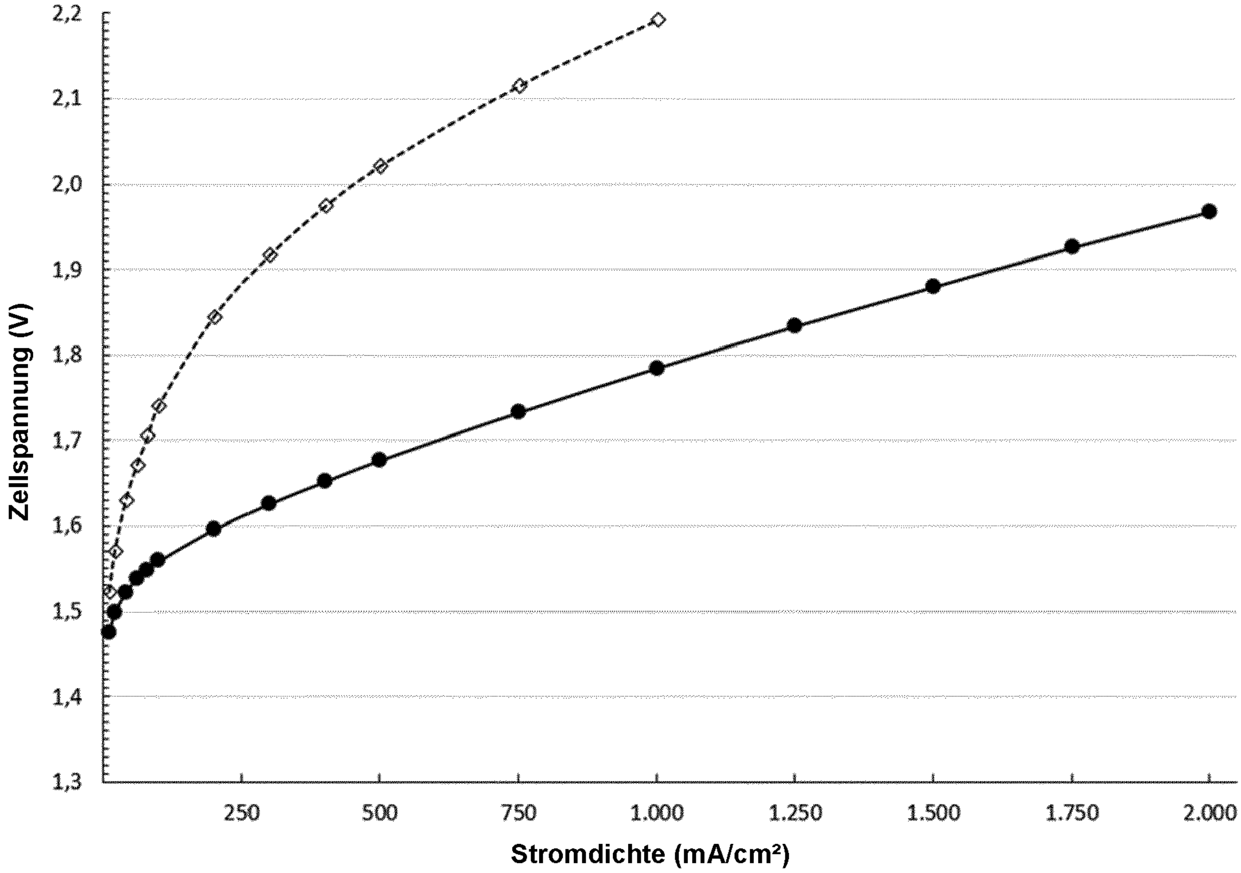
2,2
2,1
2,0
1,9
1,8
1,7
1,6
1,5
1,4
1,3
Zellspannung (V)
250
500
750
1.000
1.250
1.500
1.750
2.000
Stromdichte (mA/cm²)

Fig. 4

Europäisches Patentamt
European Patent Office
Office européen des brevets

# EUROPÄISCHER RECHERCHENBERICHT

Nummer der Anmeldung
EP 24 17 2943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2024/069174 A2 (JOHNSON MATTHEY HYDROGEN TECHNOLOGIES LTD [GB]) 4. April 2024 (2024-04-04) * Ansprüche 1, 6, 8 * | 1-22 | INV. H01M8/1018 C25B1/04 C25B9/23 C25B11/054 C25B11/056 C25B11/075 C25B11/077 C25B11/081 C25B13/08 |
| A | LEIMIN X ET AL: "Investigation of a Novel Catalyst Coated Membrane Method to Prepare Low-Platinum-Loading Membrane Electrode Assemblies for PEMFCs", FUEL CELLS, WILEY - V C H VERLAG GMBH & CO. KGAA, DE, Bd. 9, Nr. 2, 6. April 2009 (2009-04-06), Seiten 101-105, XP072360801, ISSN: 1615-6846, DOI: 10.1002/FUCE.200800114 * 2.2 Preparation of the MEAs * | 1-22 | |
| A | EP 4 181 240 A1 (EVONIK OPERATIONS GMBH [DE]) 17. Mai 2023 (2023-05-17) * Absatz [0037]; Anspruch 1 * | 1-22 | |
| A | CN 114 164 438 B (DALIAN CHEMICAL PHYSICAL INST OF CHINESE ACADEMY OF SCIENCES) 28. April 2023 (2023-04-28) * Anspruch 1 * | 1-22 | RECHERCHIERTE SACHGEBIETE (IPC) H01M C25B B01D C08J |
| | -/-- | | |

Der vorliegende Recherchenbericht wurde für alle Patentansprüche erstellt

1

| Recherchenort | Abschlußdatum der Recherche | Prüfer |
|---|---|---|
| Den Haag | 11. Oktober 2024 | Helgadóttir, Inga |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 24 17 2943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FILIMON ANCA ET AL: "New Insights on Solvent Implications in the Design of Materials Based on Cellulose Derivatives Using Experimental and Theoretical Approaches", MATERIALS, Bd. 14, Nr. 21, 3. November 2021 (2021-11-03), Seite 6627, XP093214337, CH ISSN: 1996-1944, DOI: 10.3390/ma14216627 Gefunden im Internet: URL:https://www.mdpi.com/1996-1944/14/21/6627/pdf> * Seite 10; Tabelle 5 * ----- | 1-22 | |

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| Den Haag | 11. Oktober 2024 | Helgadóttir, Inga |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 2943

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2024

| Im Recherchenbericht angeführtes Patentdokument | Datum der Veröffentlichung | Mitglied(er) der Patentfamilie | Datum der Veröffentlichung |
|---|---|---|---|
| WO 2024069174 A2 | 04-04-2024 | KEINE | |
| EP 4181240 A1 | 17-05-2023 | AR 127685 A1 | 21-02-2024 |
| | | AU 2022391917 A1 | 27-06-2024 |
| | | CA 3238362 A1 | 25-05-2023 |
| | | CN 118266105 A | 28-06-2024 |
| | | EP 4181240 A1 | 17-05-2023 |
| | | EP 4434101 A1 | 25-09-2024 |
| | | KR 20240113766 A | 23-07-2024 |
| | | TW 202335356 A | 01-09-2023 |
| | | WO 2023088714 A1 | 25-05-2023 |
| CN 114164438 B | 28-04-2023 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2023088714 A1
- CN 115832338 A
- EP 4223417 A1
- WO 2023183721 A2
- EP 24159645
- EP 24152389
- EP 24169671
- EP 3770201 A1
- EP 4032934 A1
- EP 4059988 A1
- WO 2023088714 A


### In der Beschreibung aufgeführte Nicht-Patentliteratur


- **MILLER, HAMISH ANDREW et al.** Green hydrogen from anion exchange membrane water electrolysis: a review of recent developments in critical materials and operating conditions. *Sustainable Energy Fuels*, 2020, vol. 4, 2114
- **FRÖLICH, KONSTANTIN**. Der Decal-Prozess zur Herstellung katalysatorbeschichteter Membranen für PEM-Brennstoffzellen Schriftenreihe des Instituts für Angewandte Materialien. Karlsruher Institut für Technologie
- **KOCH, S** ; **METZLER, L.** ; **KILIAN, S. K.** ; **HEIZMANN, P. A.** ; **LOMBECK, F.** ; **BREITWIESER, M.** ; **VIERRATH, S.** Toward Scalable Production: Catalyst-Coated Membranes (CCMs) forAnion-Exchange Membrane Water Electrolysis via Direct Bar Coating. *Adv. Sustainable Syst.*, 2023, vol. 7, 2200332
- **HANSEN, CHARLES. M.** The Universality of the Solubility Parameter. *Ind. Eng. Chem. Prod. Res. Dev.*, 1969, vol. 8, 1, 2-11